# EUROPEAN PATENT APPLICATION

(11) **EP 4 765 044 A1**
(43) Date of publication of application: **24.06.2026**
(21) Application number: 25224993.3
(22) Date of filing: 18.12.2025
(51) Int. Cl.: G06V 10/82, G06V 20/58

(54) **SYSTEMS AND METHODS FOR ROAD SIGN DETECTION FROM STREET LEVEL IMAGERY USING A MULTI-STAGE NEURAL NETWORK**

(30) Priority: 19.12.2024 US 202418988231
(71) Applicant: HERE Global B.V., 5611 ZT Eindhoven (NL)
(72) Inventor: DSILVA, Godson Michael, 5611 ZT Eindhoven (NL); BHOIR, Amit Ankush, 5611 ZT Eindhoven (NL); GAO, Kanke, 5611 ZT Eindhoven (NL); JIN, Xiaoying, 5611 ZT Eindhoven (NL); BHARADI, Vinayak Ashok, 5611 ZT Eindhoven (NL)
(74) Representative: Potter Clarkson

(57) **Abstract**

A road sign detection method comprises obtaining an unlabeled image of a road segment and executing a neural network trained to identify road signs within the unlabeled image. The neural network comprises a first model configured to localize an object in the unlabeled image. The neural network may further comprise a second model configured to generate classification data associated with the cropped image, based on content of the cropped image, where the classification data corresponds to one or more appearance-based attributes of the cropped image and also to determine a category of the cropped image, based on the classification data of the cropped image. The neural network may comprise a third model configured to generate road sign label data based on the determined category of the cropped image, where the road sign label data represents the identified road sign. The method further comprises outputting the road sign label data.

## Description

### TECHNOLOGICAL FIELD

The present disclosure generally relates to navigation systems and map-making processes and more particularly relates to methods and systems for detecting and classifying road signs from street-level imagery using multi-stage neural networks.

### BACKGROUND

In the context of expanding digital map capabilities and improving road safety, the accurate detection and classification of road signs from street-level imagery (SLI) are crucial. Modern mapping systems rely heavily on diverse data sources, including high-precision images from internal fleets and various consumer-grade cameras, to create comprehensive and up-to-date maps. Street-level imagery offers valuable data but presents significant challenges due to variations in camera types, image quality, and road sign designs across different regions.

Particularly, a primary challenge lies in effectively processing and integrating road sign imagery to enhance map accuracy. Variability in image quality and the diversity of camera types further complicate the accurate processing of road sign imagery. As digital maps expand to new countries and regions, the need to identify and classify a wide variety of road signs often from unannotated or under-annotated dashcam images becomes increasingly critical. Currently, available solutions are unable to address these challenges because there is no provision to account for such variations and complexities due to their reliance on dedicated fleet vehicles for map construction.

Therefore, there is a growing need for methods and systems that enable fast and efficient road sign detection using learning techniques. There is also a need for methods that account for variations in road sign imagery, support the rapid integration of new sign classes and geographic variations, and leverage synthetic data to supplement limited labeled samples.

### BRIEF SUMMARY OF SOME EMBODIMENTS

Some example embodiments are directed towards addressing the challenges of efficiently localizing and classifying road signs, particularly in diverse geographical regions and with varying camera sensors. Current systems face significant hurdles due to domain divergences between different datasets, such as camera sensor imagery and dashcam images from various vendors, which complicates the accurate classification of road signs. Additionally, as digital maps expand globally, the need to identify and classify a wide variety of road signs, often from unannotated or under-annotated datasets, becomes increasingly critical.

To overcome these challenges, various embodiments in this disclosure propose a robust framework designed to adapt to variations in camera sensors and road sign appearances across different regions. Such a framework incorporates domain adaptation techniques, self-supervised learning, and synthetic data generation to efficiently handle the discrepancies between source and target datasets. By reducing the reliance on extensively annotated datasets, this approach improves road sign classification accuracy, supports scalability, and accelerates the integration of new road sign classes.

The proposed framework follows a multi-stage process including leveraging domain adaptation and synthetic data to train models effectively with minimal labeled data. As such, the framework ensures robust performance across various image sources and allows for rapid adaptation to new geographical areas and road sign variations. Navigation systems utilizing such an approach are able to update map databases efficiently while ensuring that road sign classification remains accurate as new road signs emerge due to changes in infrastructure or geographical expansion.

In the context of road sign classification, achieving high accuracy requires handling diverse image sources and adapting to variations in road sign appearance. The proposed framework aims to overcome the limitations of traditional approaches by integrating domain adaption and synthetic data generation to train models, thus improving the model's ability to classify road signs accurately in different conditions.

According to some embodiments, the invention provides a method for obtaining an unlabeled image, localizing the road sign within the image, and generating a cropped image for analysis. As an outcome of the analysis, classification data is extracted based on the appearance of the road sign, and the method determines a category of the road sign and generates road sign label data corresponding to the categorized road sign. In some embodiments, the method provides capabilities for generating the road sign label data for signs that are known as well as for signs that are unknown to the system. As such, when incorporating new road signs (i.e., signs that were not previously known to the system), some embodiments of the disclosure provide synthetic data generation capabilities to generate the road sign label data for such new unknown signs as well. The three-stage framework of the approach allows faster training of the overall network since only the classifier model is required to be retrained for the new road sign.

In an aspect, a computerized system for road sign detection from street-level imagery using a multi-stage neural network is provided. The system may comprise a memory that stores computer-executable instructions and a neural network trained for road sign detection. The system also comprises a processor to execute the computer-executable instructions and the neural network. In this regard, the processor may obtain an unlabeled image of a road segment and execute the neural network to identify a road sign in the unlabeled image. The neural network comprises a first model configured to localize an object in the unlabeled image. The neural network may further comprise a second model configured to generate classification data associated with the cropped image, based on the content of the cropped image. The classification data may correspond to one or more appearance-based attributes of the cropped image. The processor is further configured to execute the second model to determine a category of the cropped image, based on the classification data of the cropped image. Additionally, the neural network may comprise a third model configured to generate road sign label data based on the determined category of the cropped image, where the road sign label data represents the identified road sign. The processor may be further configured to output the road sign label data.

In additional system embodiments, the road sign label data comprises a class label that defines one of a first road sign corresponding to known road signs supported by the third model, a second road sign corresponding to known road signs that are unsupported by the third model, or a negative class corresponding to unknown road signs.

In additional system embodiments, the processor is configured to update a map database using the generated road sign label data.

In additional system embodiments, the processor is configured to determine the one or more appearance attributes of the cropped image. These appearance attributes may comprise a color code, which indicates one or more colors present in the content of the cropped image. Additionally, the system may detect geometric shapes defined by the pixels of the cropped image. Further, the processor may generate a digit code representing a presence of a number within the cropped image.

In additional system embodiments, the first model of the neural network is trained for localizing road signs using a set of heterogeneous training images. The training process includes obtaining a set of heterogeneous training images and a set of labeled images. Each image of the set of labeled images comprises at least one target road sign corresponding to an appearance-based category of a plurality of appearance-based categories. The training process also includes generating synthetic images by manipulating the set of heterogeneous training images. A pretext task for self-supervised training of the first model is then defined. The pretext task corresponds to detection and localization of road sign anchors within the synthetic images. The first model is then trained in a self-supervised manner based on the pretext task and using the synthetic images. This gives a pretext model that is further trained in downstream tasks to detect and localize the at least one target road sign in each image of the set of labeled images.

In additional system embodiments, the second model comprises multiple subnets, each trained for distinct tasks. A first subnet is trained to detect one or more colors within the content of the cropped image and to determine color codes corresponding to the detected colors. A second subnet is trained to identify geometric shapes present in the content of the cropped image and to generate shape codes for each identified geometric shape. A third subnet is trained to assess a presence or an absence of a number within the cropped image, producing a presence code that indicates whether a number is present or absent. Additionally, the third subnet generates a numeral code corresponding to the detected number, if any, based on the presence or the absence determination and concatenates them.

In additional system embodiments, the neural network includes a classifier model for each category of the plurality of appearance-based categories. Each classifier model is specifically trained to map a designated appearance-based category to a corresponding class label of a set of class labels. The class labels within each set are categorized as a first road sign class, which includes known road signs that the classifier model (subnet) is designed to support; a second road sign class, which encompasses known road signs that the subnet is not configured to support (unsupported), and a negative class, which represents unknown road signs that do not fall within any categories(unknown).

In additional system embodiments, the processor further involves updating the neural network by retraining it with synthetic data. In cases where road signs are detected but not fully supported by the third model, the system generates synthetic data based on an anchor image and uses this data to retrain the network, ensuring adaptability to new or unsupported road sign categories.

In another aspect, a computer-implemented method for road sign detection from street-level imagery using a multi-stage neural network is provided. The method comprises obtaining an unlabeled image of a road segment and executing a neural network trained to identify road signs within the unlabeled image. The neural network comprises a first model configured to localize an object in the unlabeled image. The neural network may further comprise a second model configured to generate classification data associated with the cropped image, based on content of the cropped image, where the classification data corresponds to one or more appearance-based attributes of the cropped image and also to determine a category of the cropped image, based on the classification data of the cropped image. Additionally, the neural network may comprise a third model configured to generate road sign label data based on the determined category of the cropped image, where the road sign label data represents the identified road sign. The method further comprises outputting the road sign label data.

In additional embodiments, the road sign label data comprises a class label that defines one of a first road sign class corresponding to known road signs supported by the third model, a second road sign class corresponding to known road signs that are unsupported by the third model, or a negative class corresponding to unknown road signs.

In additional embodiments, the method may further comprise updating a map database using the generated road sign label data.

In additional embodiments, the one or more appearance attributes of the cropped image may comprise a color code, which indicates one or more colors present in the content of the cropped image. Additionally, or optionally, the one or more appearance attributes of the cropped image may comprise one or more geometric shapes defined by pixels of the cropped image. Additionally, or optionally the one or more appearance attributes of the cropped image may comprise a digit code indicating a presence of a number within the cropped image.

In additional embodiments, the generated road sign label data for the unlabeled image includes the second road sign class. In such cases, the third model is retrained to provide support for the unlabeled image of the second road sign class. The retraining of the third model comprises obtaining a set of heterogeneous training images and a set of labeled images. Each image of the set of labeled images comprises at least one target road sign corresponding to an appearance-based category of a plurality of appearance-based categories The retraining method further comprises generating synthetic images by performing manipulations on the set of heterogeneous training images and the set of labeled images, ensuring that the modified images are semantically coherent with labeled images. The third model is then trained using the synthetic images in a self-supervised manner based on the pretext task. This results in a pretext model which is further trained to detect and localize the at least one target road sign in each image of the set of labeled images.

In additional embodiments, the second model comprises multiple subnets, each trained for distinct tasks. A first subnet may be trained to detect one or more colors within the content of the cropped image and to determine color codes corresponding to the detected colors. A second subnet may be trained to identify geometric shapes present in the content of the cropped image and to generate shape codes for each identified geometric shape. A third subnet may be trained to assess a presence or an absence of a number within the cropped image, producing a presence code that indicates whether a number is present or absent. Additionally, the third subnet generates a numeral code corresponding to the detected number, if any, based on the presence or the absence determination and concatenates them.

In additional embodiments, the determined category is selected from a plurality of appearance-based categories and the neural network comprises a plurality of classifier models, where the third model is a classifier model of the plurality of classifier models Each classifier model is trained to map a designated appearance-based category to a corresponding class label of the set of class labels. The class labels within each set are categorized as a first road sign class, which includes known road signs that the subnet is designed to support; a second road sign class, which encompasses known road signs that the subnet is not configured to support (unsupported), and a negative class, which represents unknown road signs that do not fall within any categories (unknown).

In additional embodiments, the method may further comprise updating the neural network by retraining it with synthetic data. In scenarios where road signs are detected but not fully supported by the third model, the system generates synthetic data based on the cropped images and uses this data to retrain the network, ensuring adaptability to new or unsupported road sign categories.

In yet another aspect, a computer program product is provided. The computer program product comprises at least one non-transitory computer-readable storage medium having stored thereon computer-executable instructions which when executed by a computer, cause the computer to carry out operations for road sign detection from street-level imagery using a multi-stage neural network. In this regard, the operations include obtaining an unlabeled image of a road segment and executing a neural network that is trained to identify a road sign in the unlabeled image. The neural network comprises a first model configured to localize an object in the unlabeled image. The neural network may further comprise a second model configured to generate classification data associated with the cropped image, based on content of the cropped image, where the classification data corresponds to one or more appearance-based attributes of the cropped image and also to determine a category of the cropped image, based on the classification data of the cropped image. Additionally, the neural network may comprise a third model configured to generate road sign label data based on the determined category of the cropped image, where the road sign label data represents the identified road sign and outputs the road sign label data.

In additional embodiments, the unlabeled image is captured by one of a dashcam of a vehicle or a mobile device. The dashcam may be positioned in the vehicle to capture road segment images during transit, while the mobile device may be used by an operator or passenger to capture images manually.

The following numbered paragraphs are also disclosed:
1. A system, comprising:
   a memory configured to store computer-executable instructions and a neural network trained for road sign detection; and
   a processor configured to execute the instructions to:
      obtain an unlabeled image of a road segment;
      execute the neural network to identify a road sign in the unlabeled image, wherein the neural network comprises:
         a first model configured to localize an object in the unlabeled image to generate a cropped image;
         a second model configured to:
            generate classification data associated with the cropped image, based on content of the cropped image, wherein the classification data corresponds to one or more appearance attributes of the cropped image; and
            determine a category of the cropped image, based on the classification data of the cropped image; and
         a third model configured to generate road sign label data for the unlabeled image, based on the determined category of the cropped image, wherein the road sign label data represents the identified road sign; and output the road sign label data.
2. The system of paragraph 1, wherein the road sign label data comprises a class label defining one of: a first road sign class corresponding to known road signs supported by the third model, a second road sign class corresponding to known road signs that are unsupported by the third model, or a negative class corresponding to unknown road signs.
3. The system of paragraph 1, wherein the processor is further configured to update a map database, based on the road sign label data.
4. The system of paragraph 1, wherein the unlabeled image is captured by one of: a dashcam of a vehicle, or a mobile device.
5. The system of paragraph 1, wherein the one or more appearance attributes of the cropped image comprise:
   a color code indicating one or more colors in the content of the cropped image;
   one or more geometric shapes defined by pixels of the cropped image; or
   a digit code indicating a presence of a number within the cropped image.
6. The system of paragraph 1, wherein the generated road sign label data for the unlabeled image includes the second road sign class and wherein the third model is retrained to provide support for the unlabeled image of the second road sign class wherein the retraining comprises:
   obtaining a set of heterogenous training images and a set of labeled images, wherein each image of the set of labeled images comprises at least one target road sign corresponding to an appearance-based category of a plurality of appearance-based categories;
   generating a set of synthetic images by performing a plurality of manipulations on the set of heterogenous training images;
   defining a pretext task for self-supervised training of the first model, wherein the pretext task corresponds to detection and localization of road sign anchors within the set of synthetic images;
   training the third model in a self-supervised manner based on the pretext task and the set of synthetic images to obtain a pretext model;
   training the pretext model to detect and localize the at least one target road sign in each image of the set of labeled images.
7. The system of paragraph 1, wherein the second model comprises:
   a first subnet trained to:
      detect one or more colors in the content of the cropped image; and
      determine one or more color codes corresponding to the detected one or more colors;
   a second subnet trained to:
      identify one or more geometric shapes in the content of the cropped image; and
      generate one or more shape codes corresponding to the identified one or more geometric shapes; and
   a third subnet trained to:
      determine one of a presence or an absence of a number within the cropped image;
      generate a presence code indicating one of: the presence of the number in the cropped image or the absence of the number in the cropped image; and
      generate a numeral code corresponding to the detected number in the cropped image, based on the determined presence or absence of the number within the cropped image.
8. The system of paragraph 1, wherein the determined category is selected from a plurality of appearance-based categories, wherein the neural network comprises a plurality of classifier models, wherein the third model is a classifier model of the plurality of classifier models, and wherein each classifier model of the plurality of classifier models corresponds to a respective category of the plurality of appearance-based categories,
   wherein each classifier model of the plurality of classifier models is trained to map a corresponding category of the plurality of appearance-based categories with a corresponding class label of the set of class labels, and
   wherein each class label of the set of class labels defines one of:
      a first road sign class corresponding to known road signs supported by the corresponding classifier model;
      a second road sign class corresponding to known road signs that are unsupported by the corresponding classifier model; or
      a negative class corresponding to unknown road signs.
9. The system of paragraph 2, wherein the generated road sign label data for the unlabeled image includes the second road sign class, and wherein the processor is further configured to retrain the third model using synthetic data corresponding to the generated road sign label data.
10. The system of paragraph 9, wherein the processor is further configured to generate the synthetic data corresponding to the generated road sign label data, based on an anchor image.
11. A computer-implemented method, comprising:
   obtaining an unlabeled image of a road segment;
   executing a neural network that is trained to identify a road sign in the unlabeled image, wherein the neural network comprises:
      a first model for localizing an object in the unlabeled image to generate a cropped image;
      a second model for:
         generating classification data associated with the cropped image, based on content of the cropped image, wherein the first classification data corresponds to one or more appearance attributes of the cropped image; and
         determining a category of the cropped image, based on the classification data of the cropped image; and
      a third model for generating the road sign label data for the unlabeled image, based on the determined category of the cropped image, wherein the road sign label data represents the identified road sign; and
      outputting the road sign label data.
12. The computer-implemented method of paragraph 11, wherein the road sign label data comprises a class label defining one of: a first road sign class corresponding to known road signs supported by the third model, a second road sign class corresponding to known road signs that are unsupported by the third model, or a negative class corresponding to unknown road signs.
13. The computer-implemented method of paragraph 11, further comprising updating a map database, based on the road sign label data.
14. The computer-implemented method of paragraph 11, wherein the one or more appearance attributes of the cropped image comprise:
   a color code indicating one or more colors in the content of the cropped image;
   one or more geometric shapes defined by pixels of the cropped image; or
   a digit code indicating a presence of a number within the cropped image.
15. The computer-implemented method of paragraph 11, wherein the generated road sign label data for the unlabeled image includes the second road sign class and wherein the third model is retrained to provide support for the unlabeled image of the second road sign class, wherein the retraining comprises:
   obtaining a set of heterogenous training images and a set of labeled images, wherein each image of the set of labeled images comprises at least one target road sign corresponding to an appearance-based category of a plurality of appearance-based categories;
   generating a set of synthetic images by performing a plurality of manipulations on the set of heterogenous training images;
   defining a pretext task for self-supervised training of the first model, wherein the pretext task corresponds to detection and localization of road sign anchors within the set of synthetic images;
   training the third model in a self-supervised manner based on the pretext task and the set of synthetic images to obtain a pretext model;
   training the pretext model to detect and localize the at least one target road sign in each image of the set of labeled images.
16. The computer-implemented method of paragraph 11, wherein the second model comprises:
   a first subnet trained to:
      detect one or more colors in the content of the cropped image; and
      determine one or more color codes corresponding to the detected one or more colors;
   a second subnet trained to:
      identify one or more geometric shapes in the content of the cropped image; and
      generate one or more shape codes corresponding to the identified one or more geometric shapes; and
   a third subnet trained to:
      determine one of a presence or an absence of a number within the cropped image;
      generate a presence code indicating one of: the presence of the number in the cropped image or the absence of the number in the cropped image; and
      generate a numeral code corresponding to the detected number in the cropped image, based on the determined presence or absence of the number within the cropped image.
17. The computer-implemented method of paragraph 11, wherein the determined category is selected from a plurality of appearance-based categories, wherein the neural network comprises a plurality of classifier models, wherein the third model is a classifier model of the plurality of classifier models, and wherein each classifier model of the plurality of classifier models corresponds to a respective category of the plurality of appearance-based categories,
   wherein each classifier model of the plurality of classifier models is trained for mapping a corresponding category of the plurality of appearance-based categories with a corresponding class label of the set of class labels, and
   wherein each class label of the set of class labels defines one of:
      a first road sign class corresponding to known road signs supported by the corresponding classifier model;
      a second road sign class corresponding to known road signs that are unsupported by the corresponding classifier model; or
      a negative class corresponding to unknown road signs.
18. The computer-implemented method of paragraph 12, wherein the generated road sign label data for the unlabeled image includes the second road sign class, and wherein the method further comprises retraining the third model using synthetic data corresponding to the generated road sign label data.
19. The computer-implemented method of paragraph 18, further comprising generating the synthetic data corresponding to the generated road sign label data, based on an anchor image.
20. A non-transitory computer-readable storage medium including one or more sequences of one or more instructions which, when executed by one or more processors, cause the one or more processors to at least perform:
   obtaining an unlabeled image of a road segment;
   executing a neural network that is trained to identify a road sign in the unlabeled image, wherein the neural network comprises:
      a first model for localizing an object in the unlabeled image to generate a cropped image;
      a second model for:
         generating classification data associated with the cropped image, based on content of the cropped image, wherein the first classification data corresponds to one or more appearance attributes of the cropped image; and
         determining a category of the cropped image, based on the classification data of the cropped image; and
         a third model for generating road sign label data for the unlabeled image, based on the determined category of the cropped image, wherein the road sign label data represents the identified road sign; and
   outputting the road sign label data.

The foregoing summary is illustrative only and is not intended to be in any way limiting. In addition to the illustrative aspects, embodiments, and features described above further aspects, embodiments and features will become apparent by reference to the drawings and the following detailed description.

### BRIEF DESCRIPTION OF DRAWINGS

Having thus described example embodiments of the invention in general terms, reference will now be made to the accompanying drawings, which are not necessarily drawn to scale, and wherein:
FIG. 1 illustrates a block diagram showing a network environment of a system for road sign detection using a multi-stage neural network, in accordance with one or more example embodiments;
FIG. 2 illustrates a block diagram of the system of FIG. 1, in accordance with one or more example embodiments;
FIG. 3 illustrates a framework of a detector model of a multistage neural network used for road detection, in accordance with one or more example embodiments;
FIG. 4A illustrates a flowchart of steps depicting operations of the detector model of FIG. 3, in accordance with one or more example embodiments;
FIG. 4B illustrates schematics of Fourier Domain Adaptation technique used by the detector model of FIG. 3, in accordance with one or more example embodiments;
FIG. 5A illustrates a framework of a multi task learning model of a Multi Stage Neural Network used for road sign classification, in accordance with one or more example embodiments;
FIG. 5B illustrates a flowchart for classifying localized cropped images based on color codes by the multi task learning model of FIG. 5A, in accordance with one or more example embodiments;
FIG. 5C illustrates a flowchart for classifying localized cropped images based on shape by the multi task learning model of FIG. 5A, in accordance with one or more example embodiments;
FIG. 5D illustrates a flowchart for classifying localized cropped images based on digit code by the multi task learning model of FIG. 5A, in accordance with one or more example embodiments;
FIG. 6A illustrates a block diagram of a classifier model of a multi stage neural network used for road sign classification, in accordance with one or more example embodiments;
FIG. 6B and 6C jointly illustrate a flowchart of steps depicting operations of the classifier model of FIG. 6A, in accordance with one or more example embodiments;
FIG. 6D illustrates a flowchart of retraining a multi-stage neural network using synthetic data, in accordance with one or more example embodiments;
FIG. 6E illustrates a flowchart of steps depicting operations for the retraining of the multi-stage neural network when a sign is unknown, in accordance with one or more example embodiments;
FIG. 6F illustrates a flowchart of steps depicting the synthetic data generation used for retraining the classifier model, in accordance with one or more example embodiments;
FIG. 7 illustrates a terrestrial data capture system for performing road sign detection and classification using a multi-stage neural network, in accordance with one or more example embodiments; and
FIG. 8 illustrates a flowchart of steps depicting an operation for road sign detection using a multi-stage neural network, in accordance with one or more example embodiments.

### DETAILED DESCRIPTION

In the following description, for purposes of explanation, numerous specific details are set forth in order to provide a thorough understanding of the present disclosure. It will be apparent, however, to one skilled in the art that the present disclosure may be practiced without these specific details. In other instances, apparatuses, systems, and methods are shown in block diagram form only in order to avoid obscuring the present disclosure.

Reference in this specification to "one embodiment" or "an embodiment" means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. Further, the terms "a" and "an" herein do not denote a limitation of quantity but rather denote a presence of at least one of the referenced items. Moreover, various features are described which may be exhibited by some embodiments and not by others. Similarly, various requirements are described which may be requirements for some embodiments but not for other embodiments.

Some embodiments of the present invention will now be described more fully hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received, and/or stored in accordance with embodiments of the present invention. Thus, the use of any such terms should not be taken to limit the spirit and scope of embodiments of the present invention.

The embodiments are described herein for illustrative purposes and are subject to many variations. It is understood that various omissions and substitutions of equivalents are contemplated as circumstances may suggest or render expedient but are intended to cover the application or implementation without departing from the spirit or the scope of the present disclosure. Further, it is to be understood that the phraseology and terminology employed herein are for the purpose of the description and should not be regarded as limiting. Any heading utilized within this description is for convenience only and has no legal or limiting effect.

Street-level imagery (SLI) has become a pivotal resource for creating and maintaining digital maps and supporting various applications such as navigation, autonomous driving, and road sign detection. Modem vehicles and data capturing equipment capture SLI from multiple sources, including high-precision internal fleets, legacy systems with legacy technologies, and consumer-grade dashcams. Each source provides different levels of image quality, resolution, and sensor data, leading to diverse challenges in data integration. Applications relying on SLI data face issues related to inconsistencies in image quality and format, which impacts the accuracy and reliability of map updates and road sign detection.

Conventional systems for processing SLI data often struggle with the integration of diverse data sources, resulting in potential inaccuracies. Conventional methods do not adequately address variations in image quality and sensor characteristics, leading to challenges in maintaining accurate and up-to-date map content. This lack of effective integration can degrade the quality of map-making processes and reduce the reliability of navigation systems. Furthermore, these conventional approaches may not be equipped to handle the expansion of road sign categories or geographical variations effectively.

Example embodiments described herein introduce a neural network-based robust three-stage framework designed to enhance the integration and processing of SLI data. By incorporating a meticulous fusion of self-supervised and data augmentation techniques, various example embodiments generate road sign label data for signs that are known as well as for signs that are unknown to the system. As such, when incorporating new road signs (i.e., signs that were not previously known to the system), some embodiments of the disclosure provide synthetic data generation capabilities to generate the road sign label data for such new unknown signs as well. The framework comprises detection, which employs self-supervised learning to identify potential road signs from heterogeneous imagery. The multi-stage framework also comprises classification, which is performed using advanced methods like Supervised Contrastive Learning (SCL) and Vision Transformers (ViT) to categorize road signs based on their appearance, and road sign classification, which is performed by applying road sign labeled techniques for detailed classification to ensure high accuracy. This framework also incorporates domain adaptation and synthetic data generation to improve model performance.

Road sign detection requires vast amounts of unannotated data captured by diverse sensors, such as dashcams and mobile devices. However, one challenge lies in effectively training neural networks to recognize a broad variety of road signs from different regions without relying on extensive manually labeled data. Conventional supervised methods require significant human effort for annotations, limiting scalability and also affecting the accuracy of detection. On the other hand, example embodiments described herein are based on a realization that road sign detection should not be limited to data from specific types of sensors only. Instead, if road sign detection and classification are to be made scalable, a practical approach is to utilize multiple sources for data capture. Especially, given the fact that most vehicles and users who travel on roads are equipped with their own data gathering sensors, it is much easier and effective to utilize the data from such sensors.

Some example embodiments provide a system, a method, and a computer program for road sign detection and classification using street-level imagery (SLI) collected from various sensors, including dashcams and mobile devices. When integrated into navigation and map-making services, this advanced approach ensures accurate and adaptable road sign detection, offering enhanced precision and comprehensive coverage for mapping applications. Thus, the exemplary embodiments disclosed herein represent a significant advancement in the field of road sign detection and map updating technology.

Furthermore, the described system facilitates seamless integration with existing map-making and navigation services. By continuously learning from new data and adapting to different conditions, the system provides real-time updates and maintains high performance in diverse environments. The following sections will further detail the mechanisms by which these improvements are realized, with reference to accompanying figures for comprehensive understanding.

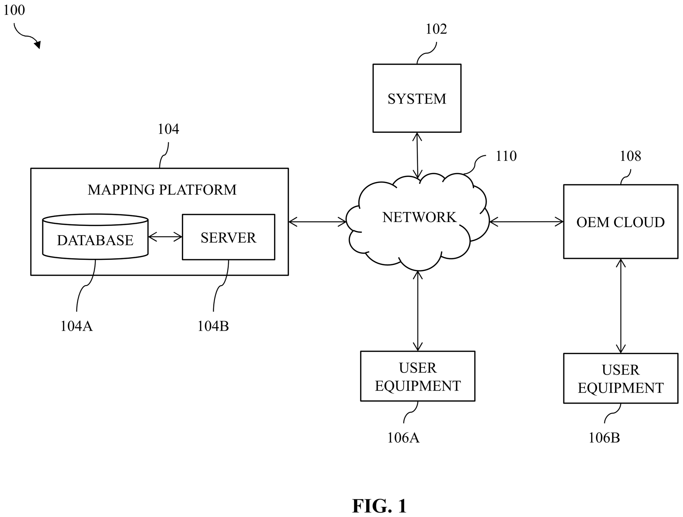

FIG. 1 illustrates a block diagram showing a network environment 100 of a system 102 for road sign detection using a multi-stage neural network. The system 102 is communicatively coupled via the network 110 to a mapping platform 104, user equipment 106A, and/or a cloud-based service 108. The cloud-based service 108 may also be coupled to additional user equipment 106B. The components within this network environment 100 may be further broken down into specific elements, such as various sensors or applications within the user devices (e.g., user devices 106A and 106B), and/or integrated into different configurations as necessary. Additionally, individual components may be rearranged, added, or modified without deviating from the overall scope of the present disclosure.

To perform road sign detection and classification process in some embodiments, the system 102 may collect an unlabeled image of a road segment captured using sensors of a sensing device such as the user equipment 106A or 106B. These images are often unlabeled (i.e., they may be raw and/or unprocessed images without any indication of what lies in those images) and come from different environmental conditions and road segments. The core component of the system is a neural network performing a multi stage process, which includes three models for road detection and classification. The training of the first model, also known as a detector model, involves using a set of heterogeneous training images collected from various sensors, alongside a set of labeled images with ground truth annotations for road signs. The labeled images provide a reference for accurate detection and classification. A set of modified images is generated through several manipulations applied to both the heterogeneous and labeled images. These manipulations include domain adaptation which includes the Fourier domain adaption technique to adjust the image for different environmental conditions and sensor characteristics, and histogram matching to adjust the pixel values of an image.

The generated modified images retain semantic coherence with the labeled images, ensuring that the road sign characteristics are preserved. This approach enables the first model to be trained effectively, allowing it to detect and localize road signs accurately across diverse scenarios. Once trained, the first model processes unlabeled images to localize potential road signs, generating cropped images that focus on these regions.

The cropped images are then passed to a second model for further classification. The second model is called the multi-task learning model, which is structured with multiple subnets, each responsible for analyzing specific attributes of the cropped images. The first subnet detects colors within the image and generates corresponding color codes. The second subnet identifies geometric shapes and produces shape codes based on the detected shapes. The third subnet determines the presence or absence of numbers within the image, generating a presence code and, if necessary, a numeral code for detected numbers and concatenate the digit code.

Based on the classification data from the second model, the third model, also referred to as a road sign label classifier model, performs detailed categorization. This model includes a subnet for each appearance-based category identified by the second model. Each subnet is trained to map a specific category to a set of class labels. These labels define road sign classes, including known signs supported by the subnet, known signs unsupported by the subnet, and unknown signs that do not fit any predefined categories. This categorization ensures accurate identification and classification of road signs.

If the road sign label data indicates as unsupported road sign, the system can generate synthetic data to retrain the neural network. This retraining process helps to address gaps in the initial training data, ensuring that the model continually improves its performance. The synthetic data for an unknown or unsupported sign is derived from an anchor image and is used to update the model, enhancing its ability to detect and classify road signs accurately as new data becomes available. Following the classification and categorization by the third model, the system outputs the road sign label data. This road sign label data includes detailed information about the type and characteristics of each detected road sign. The system then updates the map database with this newly acquired and classified road sign data.

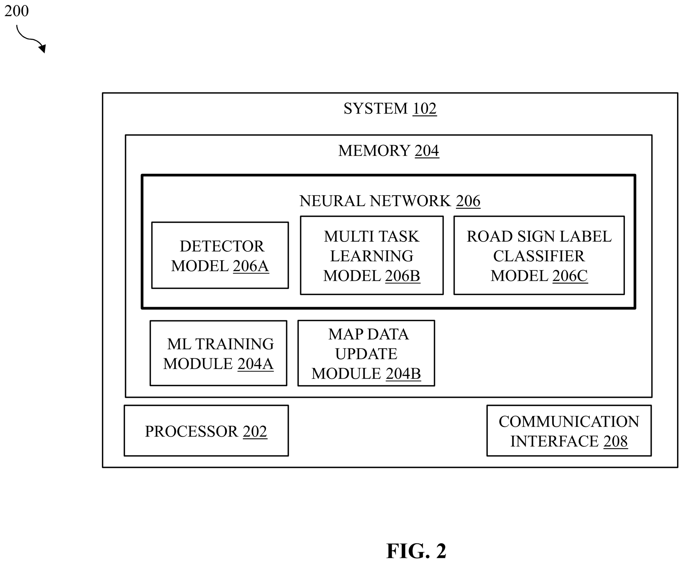

FIG. 2 illustrates a block diagram of the system 102 of FIG. 1, in accordance with one or more example embodiments. The system 102 includes at least one processor 202, a memory 204, and a communication interface 208. The memory 204 stores amongst other things, a neural network 206, which comprises a detector model 206A, a multi-task learning model 206B, and a road sign label classifier model 206C. Additionally, the memory 204 is configured to store data, information, and software programs executable by the processor 202. The memory 204 includes various modules such as an ML training module 204A and a map data update module 204B. The processor 202 fetches these modules from the memory 204 and executes them as desired.

The first model i.e., the detector model 206A, is an integral component of the neural network 206 in the memory 204 in the system 102, designed to detect and localize road signs from heterogeneous unlabeled images. The detector model may be trained by first collecting a set of heterogeneous training images from various sensors and a set of labeled images annotated with road sign information. A set of modified images may then be generated by performing manipulations such as Fourier Domain Adaption for adjustments in lighting and Histogram matching for adjusting the pixel values of the image, for example in the ratio of 70:30, and to ensure semantic coherence with the labeled images. The detector model 206A is trained using these modified images to learn patterns and features relevant to road sign detection, enabling it to accurately identify and locate road signs across diverse scenarios and image sources.

The second model, also referred to as the multi-task learning model 206B is structured to handle multiple classification tasks concurrently. This model includes three distinct subnets, each dedicated to a specific aspect of road sign analysis. The first subnet is trained to detect and categorize colors present in the cropped images, generating unique color codes corresponding to the detected colors. The second subnet focuses on identifying geometric shapes within the images, producing shape codes for each recognized shape, thereby facilitating the differentiation of various road signs based on their shapes. The third subnet is responsible for assessing the presence or absence of numerical elements in the images so as to categorize the underlying sign as a speed sign or non-speed sign. In this regard, the third subnet generates presence codes or absence codes to indicate whether a number is detected or not and numeral codes to identify the detected specific numbers and concatenates both the presence/absence code and the numeral code to form a digit code corresponding to the sign detection.

The third model of the neural network 206, known as the road sign label classifier model 206C is designed to categorize road signs into predefined appearance-based categories. In some embodiments, the third model may be a group of multiple classifier models, with one classifier model defined for each category of the plurality of appearance-based categories, and each dedicated to recognizing and mapping road signs to a specific set of class labels. The class labels may include a first class for known road signs supported by the subnet, a second class for known road signs that are not supported, and a negative class for unknown road signs. In some embodiments, the third model may be one amongst the group of multiple classifier models. To enhance its effectiveness, various embodiments incorporate synthetic data, which is generated to simulate various road sign scenarios. This synthetic data is used to retrain the model when encountering road sign label data that falls into the second class, that is the road sign which is known but unsupported. Specifically, synthetic data is generated corresponding to the generated road sign label data based on cropped images.

The ML training module 204A in the system is responsible for utilizing the collected image data to enhance the detection and classification of road signs. It processes raw data from street-level imagery, including dashcam footage, by feeding those images into the neural network models. During the ML training process, the ML learning module 204A analyzes patterns and discrepancies in the data, learning how to differentiate between various road sign classes, including new or unknown signs. The ML learning module 204A refines its models by evaluating both appearance-based and fine-grained classification features, ensuring accurate labeling of road signs. The ML training is performed iteratively, with the module using synthetic data to augment training when labeled data is sparse or unavailable. The ML training module 204A utilizes real-world and synthetic data to train these models, ensuring they can handle a wide variety of road sign appearances, shapes, and conditions.

The map data update module 204B may be utilized by the processor 202 to update or add map data to a suitable repository such as the map database 104A. In this regard, the processor 202 may generate road sign label data in accordance with various example embodiments and thereby invoke the map data update module 204B to append the generated road sign label data to the map data of the corresponding object. In this regard, the module 204B may fetch a suitable identifier corresponding to the location of the detected road sign for which road sign label data is generated, and add the road sign label data to the object identified with the identifier. In cases where no object is identified for the corresponding identifier, the module 204B may create an object corresponding to the detected road sign and associate the generated road sign label data to it.

The processor 202 may be embodied as a singular, versatile hardware processing unit capable of executing a wide range of computational tasks. In some embodiments, the processor 202 may be implemented as a microprocessor, digital signal processor (DSP), or other suitable integrated circuits such as an application-specific integrated circuit (ASIC), a Graphics Processing Unit (GPU), or an AI engine (Artificial Intelligence enabled processing engine). Additionally, the processor may also be configured as a field-programmable gate array (FPGA) to provide further adaptability in performing specialized tasks. Despite being a single processor, it is designed to execute complex and multi-layered instructions for tasks. The processor 202 interfaces with various modules within the system, utilizing the memory to execute machine learning models that enable the detection, classification, and continuous updating of road sign information. By leveraging its architecture, the processor is capable of optimizing operations, ensuring efficient processing of data related to road sign detection from heterogeneous sensor inputs, while also managing synthetic data generation and retraining as necessary.

The memory 204, in communication with the processor 202, plays a crucial role in the overall operation of the system 102. The memory is a non-transitory storage medium that may consist of one or more types of volatile and non-volatile memory components. This could include dynamic random-access memory (DRAM), static RAM (SRAM), flash memory, or other electronic storage devices that enable efficient data storage and retrieval. As an integral part of the system, the memory 204 is designed to store a variety of information, including raw sensor data, machine learning models, intermediate outputs, and executable instructions, ensuring that the system is equipped to handle the large volumes of data necessary for accurate road sign detection and classification. The memory 204 serves as a buffer, temporarily storing input data for real-time processing by the processor 202. It also holds pre-trained models and synthetic data used for retraining the models and neural network, thereby enabling the system to adapt dynamically to new road signs and environmental conditions. By being tightly integrated with the processor 202 via a bus, the memory 204 supports fast data transmission and retrieval, ensuring the system's high performance in executing complex machine learning algorithms and supporting big data analysis required for road sign detection and classification.

As exemplarily illustrated in FIG. 2, the memory 204 is configured to store instructions specifically for execution by the processor 202. The processor 202, whether implemented through hardware, software, or a combination thereof, represents a physical entity capable of performing the complex operations required for road sign detection and classification. In cases where the processor 202 is embodied as an ASIC (Application-Specific Integrated Circuit), FPGA (Field-Programmable Gate Array), or similar hardware-based solution, it is specifically configured to execute the operations and algorithms that drive the invention. Alternatively, when the processor 202 operates under software instructions, those instructions stored in the memory 204 guide its operation, specifically configuring it to execute the tasks associated with the multi-stage neural network. For example, the processor 202 can be responsible for handling image processing tasks, feeding data into various models, or performing inference on new imagery. Furthermore, the processor 202 is equipped with essential components, such as a clock, an arithmetic logic unit (ALU), and logic gates, which support its overall function and ability to execute instructions in real-time. The tight integration between the processor 202 and the memory 204 ensures that data is efficiently processed, and instructions are rapidly executed, enabling the system to adapt dynamically to new road sign inputs.

The communication interface 206 serves as an access point for the system's features and data, which may include inputs and outputs displayed through a graphical user interface (GUI), touch interface, voice-enabled interface, or keypad. For example, the communication interface 206 could be the touch-enabled interface of a vehicle's navigation system, displaying real-time road sign detection information and alerts, such as upcoming speed limit changes, stop signs or lane restrictions. This data allows drivers or autonomous systems to navigate efficiently and safely, using the real-time road sign classification and detection data processed by the system. The synthetic data generated is integrated into the system via the communication interface 206, which allows for seamless updates and interactions. For example, the interface could be part of a vehicle's navigation system, where real-time updates on road sign detection and classification are displayed to assist drivers or autonomous systems. These updates provide essential information for tasks such as adjusting speed, executing maneuvers, and navigating complex road scenarios enhancing overall driving safety.

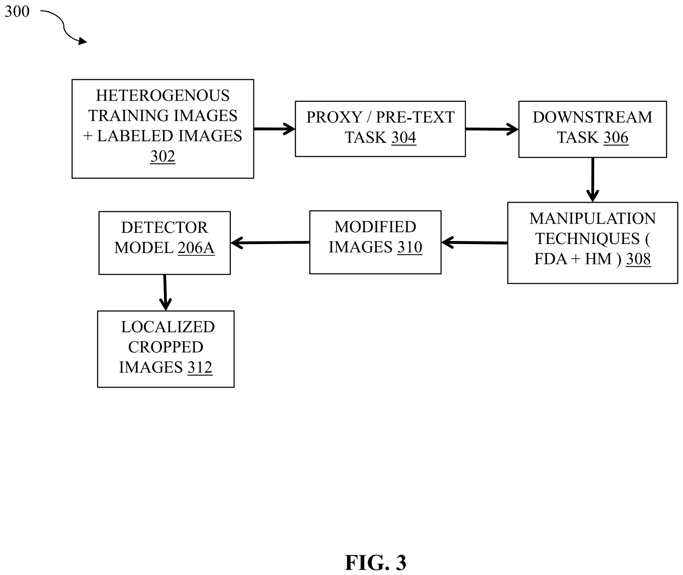

FIG. 3 illustrates a framework 300 of a detector model of a multi stage neural network for detecting road signs using heterogeneous image data, in accordance with one or more example embodiments. The framework 300 comprises data collection at block 302, proxy task execution at block 304, and downstream task execution at block 306. Additionally, the framework 300 includes manipulation techniques 308 to enhance image quality and variation, followed by detector model execution at block 206A and localized cropping of road sign images at block 312. The framework 300 is designed efficiently to localize the road signs present in the image.

Heterogeneous training images and labeled images 302 are collected from various sources, including street-level imagery, dashcams, mobile phones, and dedicated vehicles. For example, the heterogeneous images may be collected from end-user devices such as user vehicles or cameras while the labeled images may be provided by dedicated vehicles that may be equipped with high-end image sensors and processing circuitry. In some embodiments, data may also be collected from sensors integrated into vehicles, such as cameras and GPS, providing additional context and improving the system's ability to detect road signs. These images form the foundation of the training data.

Following the collection of heterogeneous images, at block 304, the system 102 performs a proxy or pre-text task on the data which is a part of self-supervised learning (SSL) to prepare it for further processing. The proxy task is used to learn a good representation of the data and then use it as a pre-trained network for the downstream task with few labeled samples.

Proxy tasks such as rotation, solving jigsaw puzzles, finding relative positions, contrastive learning, and clustering can be used. This step is crucial for the initial organization and feature extraction of the collected images, allowing the system to begin distinguishing between different visual elements in the data. The proxy task 304 includes processes such as self-supervised learning, which enables the system to generalize features from both labeled and unlabeled images. For example, road signs from different countries or regions may have unique shapes and sizes, so this step is essential in providing the system with a foundational understanding of those differences. Additionally, the proxy task helps reduce the dimensionality of the data and extract critical features that will later be used to enhance the downstream task performance. In various embodiments, the heterogeneous training images may be subjected to one or more manipulation tasks to generate a set of synthetic images. A pretext task for self-supervised training of the detector model (also referred to as the first model). The pretext task may be for example, for detection and localization of road sign anchors within the set of synthetic images. The model trained on these synthetic images may be considered a pre-trained or pretext model. After completing the proxy task, the system 102 applies a downstream task 306 which is also a part of SSL where the categorized data from the pre-text task is fine-tuned for specific applications such as road sign detection and classification. This stage fine-tunes the pre-trained model to focus on road sign detection and classification based on appearance-based categories. The downstream task includes evaluating how well the model localizes the road signs and compares self-supervised learning with supervised models to ensure effective detection. The fine-tuning evaluates the pretext model's detection and localization of road signs in a set of labeled images (i.e. images with localized indications of signs).

Manipulation techniques 308 are applied to the set of heterogeneous images and to the set of labeled images to enhance the quality and alignment of those images for road sign detection. This process involves a combination of the Fourier Domain Adaptation (FDA) technique and Histogram Matching (HM) technique, applied in a 70:30 ratio. FDA begins by computing the Fast Fourier Transform (FFT) of both source images, which are well-annotated and consistent, and target images, which may come from varied dashcams with differing characteristics. By replacing the low-level frequency components of the target images with those from the source images and then reconstructing the images via inverse FFT, FDA aligns the visual style of the target images with that of the source images and gives the result image. This approach ensures that the fundamental visual features of the target images are more consistent with the source images, aiding in improved model performance. Concurrently, Histogram Matching calibrates the pixel value distributions of the target images to match those of the source images. This technique equalizes the histogram value of the target image to the histogram values of the source image, which helps in correcting differences caused by varying camera sensors and environmental conditions. By addressing discrepancies due to different camera sensors, lighting conditions, or environmental factors, these manipulations are added to the images to enhance the consistency of the data, making it more suitable for training the detector model.

The system generates modified images 310 by applying various manipulations such as FDA and HM to the data. These modifications ensure that the images are semantically coherent with labeled images, improving the quality and relevance of the training data. Semantic coherence may be established as long as the contents of the labeled images remain unchanged during the manipulations.

The system utilizes the detector model 206A, to process the modified images generated in block 310. This detector model 206A is specifically designed to detect and localize road signs within the images, leveraging its training on diverse, heterogeneous datasets and labeled datasets. By applying detector model 206A to the enhanced and manipulated images, the model generates localized cropped images 312 of the signs, which are then prepared for further classification and analysis, where the output from the detector model 206A is a localized road sign with high recall.

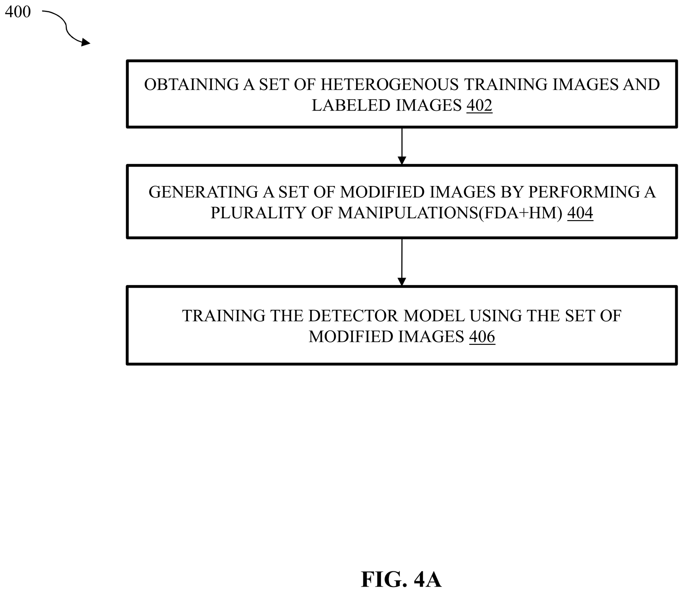

FIG. 4A illustrates a flowchart 400 of steps depicting operations of the detector model, according to one or more example embodiments. The process begins with step 402, where the system collects a set of heterogeneous training images and labeled images from various sources. These images are captured using different sensors and conditions, ensuring a broad range of environmental and sensor variations. For example, images may be collected from dashcams, street-level cameras, and mobile phones, capturing diverse weather conditions, lighting scenarios, and road types. This diverse dataset provides the foundational training material for the model. Following this, at step 404, the system generates a set of modified images by performing the plurality of manipulations 308 on the heterogeneous images and labeled images. The manipulations include Fourier Domain Adaptation (FDA) and Histogram Matching (HM), applied in a 70:30 ratio, respectively. For instance, FDA adjusts the frequency components to align the source images (e.g., from dedicated fleet vehicles) with the target images (e.g., from different dashcam vendors), while HM modifies pixel intensity distributions to further harmonize the visual appearance. This process ensures that the modified images remain semantically coherent with the labeled images, enhancing the quality and relevance of the training data.

After generating the modified images, step 406 involves training the detector model 206A, using the modified images generated in step 310. The detector model is designed for the detection and localization of road signs within the images. For example, after applying FDA and HM, the detector model can be trained to recognize road signs in varied conditions such as low-light environments or different road sign designs. The model utilizes feature representations learned from proxy/pe-text tasks, such as rotation prediction or contrastive learning, and downstream tasks where the pre-text task model is used as a pre-trained network and fine-tunes this network on the actual domain-specific task of road sign detection for appearance-based categories on target images from multiple sources which is performed in the self-supervised learning. This enables the model to accurately detect and classify road signs across different sensor configurations and environmental conditions. The trained detector model is used to detect and localize road signs within new images in a high recall. For example, if a dashcam image of a highway is provided as input, the system 102 utilizes the trained detector model to identify road signs and crop them from the image. These cropped images may then be used for further processing and analysis, including refining the detection model and updating map databases.

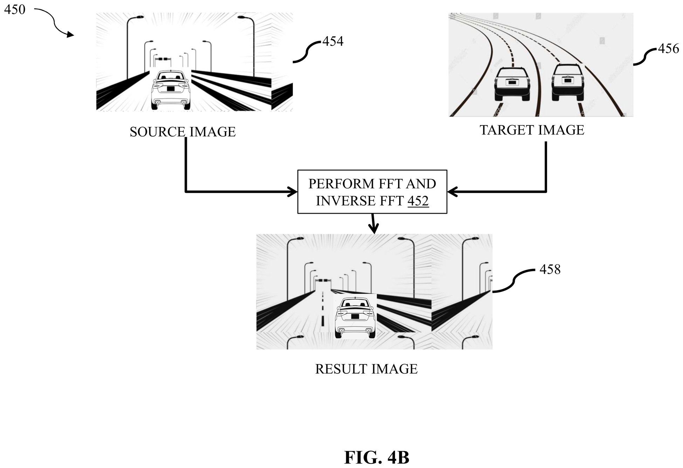

FIG. 4B illustrates a schematic diagram 450 describing the Fourier Domain Adaptation (FDA) technique used by the detector model, in accordance with one or more example embodiments. The objective of this process is to enable the detector model to perform consistently well across both high-quality and lower-quality image datasets so as to reduce domain divergence. This technique is pivotal for adapting heterogeneous image datasets, particularly for road sign detection tasks, by aligning the characteristics of source images 454 (captured by high-quality cameras, e.g.: dedicated fleet vehicles) and target images 456 (from dashcam footage with varying quality and conditions). In this embodiment, the system 102 applies the FDA to perform domain adaptation by manipulating the source and target images. The source image 454 features a well-lit road with a clearly visible car that may be captured by a high-resolution camera. On the other side, the target image 456 shows a road with two cars but under lower light intensity, typically captured by a dashcam. The FDA process involves transforming these images into the frequency domain using the Fast Fourier Transform (FFT) 452.

In this step, the system 102 isolates the low-frequency components of the source image, which represent the global structure and lighting, and replaces them with the corresponding low-frequency components from the target image. This step ensures that the result image 458 retains the source image's original semantic content, such as road signs and cars, but now features the global lighting and intensity conditions of the target image. The exchange of these low-level frequencies is crucial for improving the source image's alignment with the target image, ensuring that the model can process and analyze them efficiently.

After the frequency replacement, the system performs an inverse FFT (iFFT) as a part of step 452 to transform the image back into the spatial domain. The resulting image 458, shows similar to the source image, the cars and road structure from the source image remain intact. This transformation ensures that the semantic coherence between the source and result datasets is preserved while normalizing the lighting conditions and overall image intensity. By aligning these low-frequency components, the invention allows the existing annotations from the source images to be used directly on the target images, eliminating the need for costly re-annotations. For instance, a speed limit sign annotated in the source image can be carried over to the target image post-transformation. This makes it significantly easier to adapt the model trained on high-quality data to perform equally well on dashcam data, which may otherwise be too low in quality for accurate detection. The detector model 206A, after being trained on these manipulated images, can detect and localize road signs across both source and target images with high accuracy.

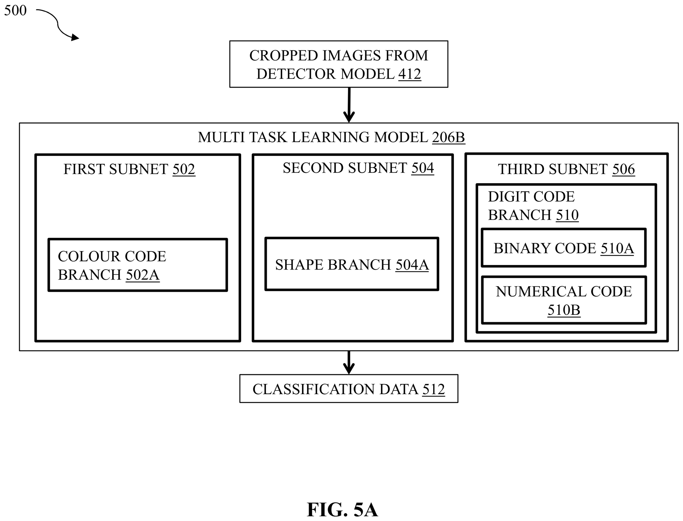

FIG. 5A illustrates a framework 500 of a multi task learning model of a multi stage neural network used for road sign classification, in accordance with one or more example embodiments. The framework 500 comprises the detection of cropped images from a detector model at block 312, a multi-branch classification model 206B involving a Color Code Branch 502A, Shape Branch 504A, and Digit Code Branch 510 within sub-networks named first subnet 502, second subnet 504, third subnet 506 respectively. These sub-networks are responsible for handling different aspects of road sign features such as color, shape, and alphanumeric data respectively after the detector model localizes the road signs. Additionally, the architecture includes classification data 512, which is the output of the combined feature data for the next stage/model.

The system framework 500 comprises three key branches that operate as sub-networks within the Multi-Task Learning Model 206B. These branches are designed to extract specific features from the cropped road sign images, which were previously detected by the detector model 312. There are three subnets where, First Subnet 502 is responsible for extracting color-related information from the cropped image. This subnet contains the Color Code Branch 502A, which detects the predominant colors such as red, yellow, black, white, blue, etc. in the road sign and classifies them accordingly. The subnet detects one or more colors and determines one or more color codes corresponding to the detected one or more colors. The Color Code Branch 502A analyzes the color features and outputs a color code that represents the detected color.

The next subnet is the Second Subnet 504 which handles the shape classification of road signs. This subnet focuses on identifying the geometric shapes present in the road sign. It includes a Shape Branch 504A, which classifies the shapes into categories such as circular, triangular, rectangular, diamond-shaped, or octagonal. Shape classification is essential for distinguishing between different types of road signs, such as speed limit signs (often circular) or yield signs (often triangular). The output of this subnet is a categorical label representing the shape of the sign, which can then be used in combination with color classification to make a more informed decision about the sign type. For example, a red_octagon and yellow_diamond. In another aspect, the cropped images from the detector model are the input for this shape classification and then for the color classification.

The third subnet 506 performs the detection and classification of numeric code present on the road signs. This subnet, which includes Digit code branch 510, comprises two blocks the Binary Code Branch 510A and the Numerical Code Branch 510B. The Binary Code Branch 510A classifies binary-coded information found on specific road signs. The Numerical Code Branch 510B handles the identification and classification of numeric data, such as speed limits or exit numbers. This branch generates a presence code indicating the presence of a number in the cropped image, or an absence code if no number is detected. Additionally, it generates a numeral code corresponding to the detected number in the cropped image. The digit code branch consists of a 10-bit binary sequence, where the first two bits denote the presence or absence of the number which means whether the road sign contains a number, a negative symbol, or no number, and the remaining eight bits represent the numeric value in binary format. After the generation of the codes, the output from this digital code branch 510 will be the concatenated output of binary code 510A and numerical code 510B which is output as corresponding to digit code 512. At the end, all the output data from color code, shape branch code, and digit branch code are merged and provided as classification data for the next model.

For instance, a road sign indicating a speed limit of 60 kmph with a red color and a circular shape is detected and localized by the detector model 206A and passed as a cropped image to the Multi-Task Learning Model 206B. The First Subnet 502 classifies the red color, the Second Subnet 504 identifies the circular shape, and the Third Subnet 506 classifies the digit "60." and the Classification Data 512 is formed from the outputs of the First, Second, and Third Subnets.

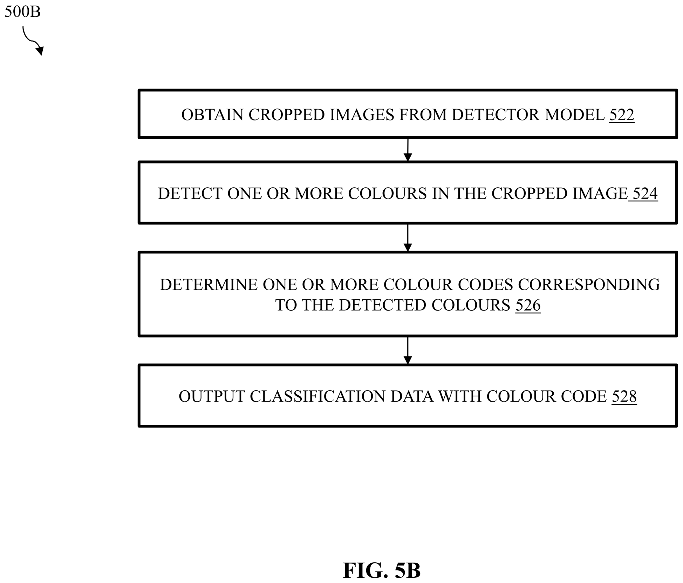

FIG. 5B illustrates a flowchart 500B for classifying localized cropped images based on color codes by the multi task learning model of FIG. 5A, in accordance with one or more example embodiments, The steps illustrated in the flowchart are directed towards color detection and classification based on cropped images 312 obtained from the detector model. At step 522, the cropped images from the detector model are obtained. These cropped images 312 contain road signs identified by the detector model. At step 524, the system detects one or more colors within the cropped images. This involves analyzing the color distribution to identify predominant colors. For example, if the cropped image contains a 'red color stop sign surrounded by white color, this step will detect the presence of the red and white color within the image.

After detecting the colors, at step 526, the system determines one or more color codes 502C corresponding to the detected colors. This step involves mapping the identified colors to a predefined set of color codes that are standardized for classification purposes. For instance, if the detected color is red, the system assigns the appropriate color code for red based on classification standards. These color codes are essential for associating the colors with specific road sign types, such as regulatory, warning, or informational signs. At step 528, the system outputs classification data with the color code. The classification data includes the assigned color code, which can be used for further classification tasks. Accurate color identification allows the system to make precise classifications.

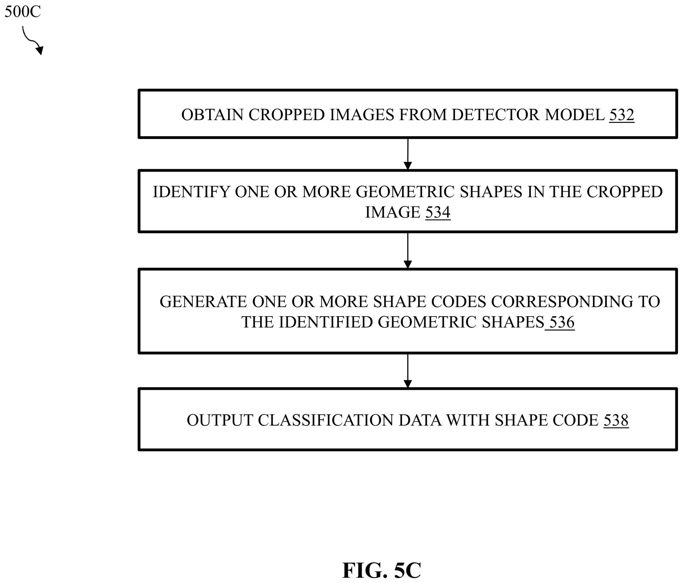

FIG. 5C illustrates a flowchart 500C for classifying localized cropped images based on shape codes by the multi task learning model of FIG. 5A, in accordance with one or more example embodiments. Particularly, FIG. 5C illustrates steps for performing geometric shape detection and classification from cropped images generated by the detector model 206A. The classification begins at step 532 with obtaining cropped images 312 from the detector model. These images represent specific regions of interest, such as road signs, that have been isolated from a larger scene. The next step 534 involves identifying one or more geometric shapes within the cropped image. The system may use shape detection algorithms to recognize and categorize various geometric shapes present in the image, such as circles, rectangles, triangles, diamonds, and octagons to name a few.

Following the identification of geometric shapes, at step 536, the system generates one or more shape codes corresponding to the identified shapes. This involves mapping the detected shapes to predefined codes that represent each shape type. For example, a detected circle might be assigned a specific code for circles. The final step 538 outputs the classification data with the shape code. The classification data includes the assigned shape codes, providing detailed information about the geometric characteristics of the detected road signs or objects. This data is used for accurate identification and further processing in subsequent stages.

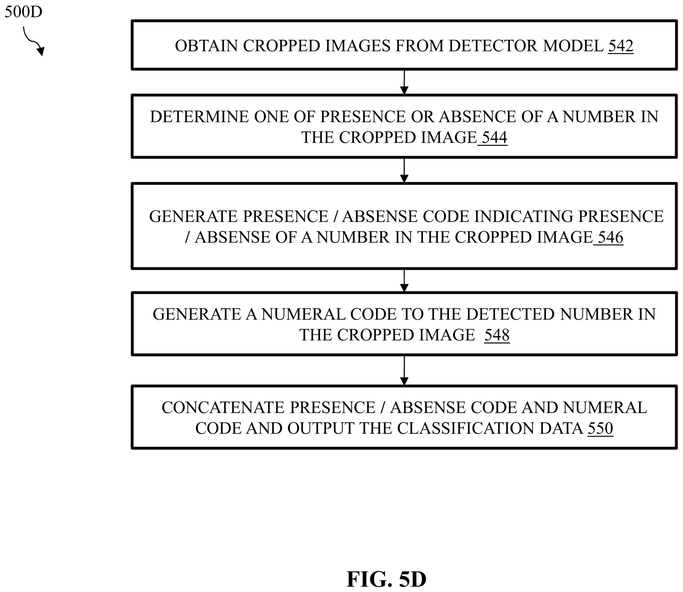

FIG. 5D illustrates a flowchart 500D for classifying localized cropped images based on Digit code by the multi task learning model of FIG. 5A, in accordance with one or more example embodiments. At step 542, the system obtains cropped images from the detector model. These cropped images focus on specific regions of interest within the scene, such as road signs, which are identified by the detector model. In the next step 544, the system evaluates the cropped image to determine whether a number is present or absent. For instance, if the cropped image contains a speed limit sign with the number "60," the system identifies that a number is present. Conversely, if the image is of a road sign that does not include numeric information, such as a warning sign with a symbol but no numbers, the system determines that no number is present. Based on the determination, at step 546 the system generates a presence/absence code indicating presence/absence of a number in the cropped image. For example, a binary value may be chosen to indicate the presence/ the absence of the number in the detected sign where in an example embodiment 0 may indicate the absence of the number while 1 may indicate the presence of the number.

Following the generation of the presence/absence code, at step 548 the system generates a numeral code corresponding to the number detected in the cropped image. This numeral code may be represented using any suitable representation of the numeric value. For example, for a speed limit sign showing "60," the numeral code would represent "60" in binary or hexadecimal format. Finally, at step 550, the system concatenates the presence/absence code and numeral code as a digit code and outputs the classification data. This concatenated output provides a comprehensive representation of the numeric information in the image. After processing through shape classification, color classification, and digit code classification, the system consolidates the results into comprehensive classification data. This data integrates the shape of the road sign (e.g., circle, rectangle), the detected color (e.g., red, blue), and any numeric information (e.g., speed limit or exit number) encoded in binary format and proceeds to the next stage that is the third stage which has road sign classifier model.

It is important to note that the system can process the cropped images in any order, allowing for flexibility in whether shape classification, color classification, or digit code classification occurs first, second, or third, depending on the specific design and requirements of the multi-task learning model.

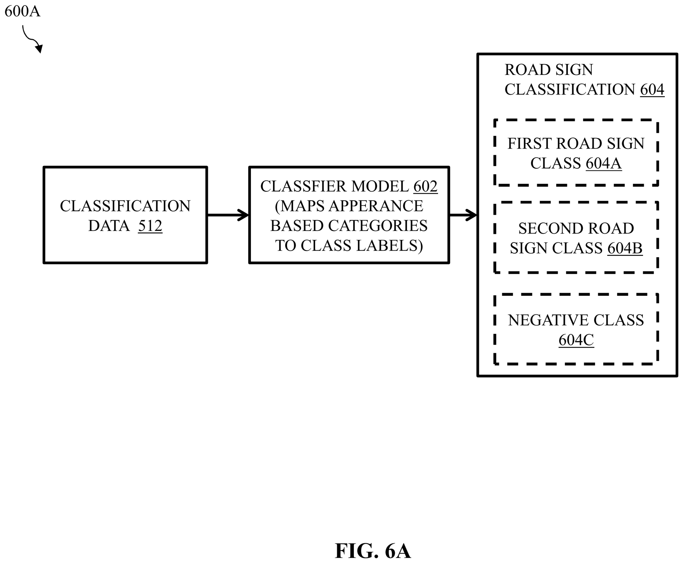

Referring back to FIG. 5A, the multi-task learning model generates the classification data 512 in the manner described above with reference to FIGs. 5B-5D. The classification data is processed further by the Multi Stage Neural Network to generate the road sign label data corresponding to the classification data and the output of the detector model. In this regard, the Multi Stage Neural Network comprises a plurality of classifier models, where each classifier model corresponds to an appearance-based category. The classifier model selected for any classification data depends on the respective appearance-based attribute defined for that data. FIG. 6A illustrates a block diagram 600A of a classifier model 602 of the Multi Stage Neural Network used for road sign classification, in accordance with one or more example embodiments. The road sign label classifier model 206C shown in FIG. 2 may be considered to be a group of the plurality of classifier models 602 shown in FIG. 6A. As such, in some instances, the classifier model 602 may interchangeably be referred to as a subnet 602. The classification data 512, which is derived from the output of the previous stages, including color, digit, and shape classification is obtained. This classification data is then processed by the classifier model 602, trained for mapping the appearance-based categories to specific class labels. In this step, the subnet 602 takes the appearance-based categories identified from the earlier processing stages and maps them to predefined class labels. The subnet is trained to translate the abstract appearance-based categories into concrete classifications that are relevant for road sign identification. This mapping process ensures that each appearance-based category is associated with one or more specific class labels.

The next step involves road sign classification 604, which uses the class labels produced by the subnet 602 to further categorize the road signs into distinct classes where the classified road sign should fall into any one of the class labels. Road signs may be classified into any of three classes. These include a first road sign class 604A that includes road signs that are known and well-supported by the corresponding model for the appearance-based category. For example, if the appearance-based category is "white_black_red," the first road sign class 604A includes all road signs that fit this category and are accurately supported by the model. Another component of road sign classification 604 includes a second road sign class 604B that encompasses road signs that are known but not supported by the road sign label classifier model 206C of FIG. 2. These are road signs that fall under the appearance-based category but do not have sufficient annotated data or training examples to be recognized accurately by the model. The third component of road sign classification is negative class 604C which includes road signs that do not belong to any of the class labels currently available with the multi-stage neural network. After processing through road sign classification block 604, the system outputs the final classification data, which includes the assigned class labels for each road sign. This classification data helps in accurately identifying and categorizing road signs based on their appearance and associated attributes

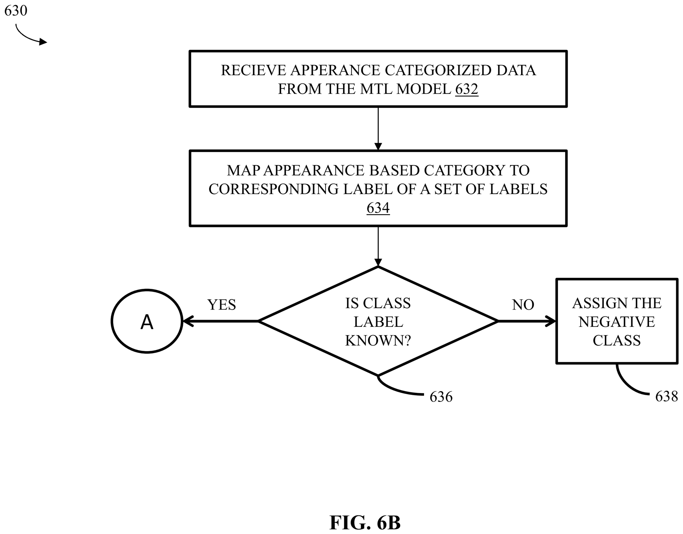

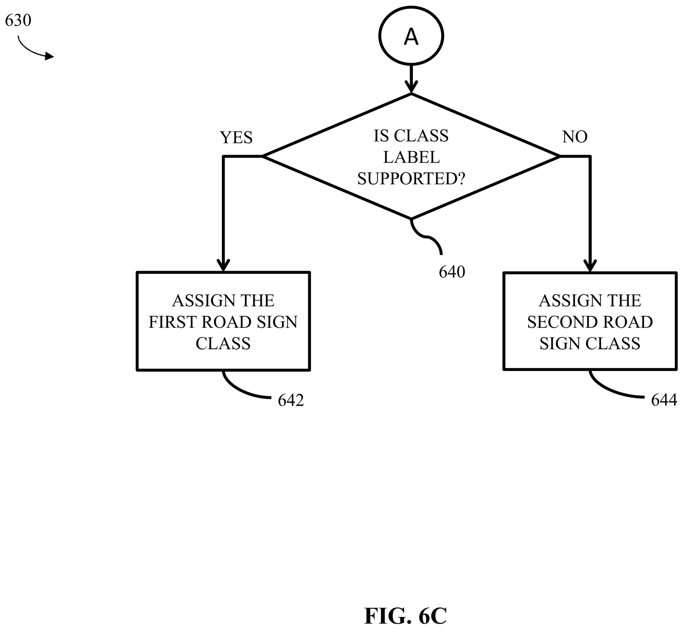

FIG. 6B and 6C jointly illustrate a flowchart of steps depicting an operation of the classifier model 602, in accordance with one or more example embodiments. The flowchart begins with receiving 632, classification data 512 categorized based on appearance attributes (such as shape, color, or numerical content) from the MTL model 206B as shown in FIG. 5A. In step 634, the system maps the received appearance-based category in the classification data to a corresponding class label of a set of class labels. In this regard, during training of the multi stage neural network, each road sign supported by the system may be categorized into an appearance-based category that is assigned to one class label of the set of class labels. That is, each class label has an assigned appearance-based category. As such, each subnet (classifier model) 602 of the road sign label classifier model 206C is specialized for a particular category (e.g., color-coded categories like white-black-red for speed limit signs) and is designed to classify road signs according to the appearance data provided.

At step 636, the system then determines if the class label for the current data is known. If the class label is not recognized or not known then at step 638, the image (i.e., road sign) is assigned to the negative class 604C, representing signs that fall outside the range of known appearance-based categories or lack sufficient annotated training data. However, if the class label is recognized, the control of steps passes to FIG. 6C where at step 640 the system checks whether it is supported by the corresponding subnet. If the label is not supported, at step 644 the sign is assigned to the second road sign class 604B, which includes road signs that are known but not fully supported within the subnet. However, if the class label is both known and supported, at step 642 the system assigns the sign to the first road sign class 604A. This class represents road signs that are well-categorized and fully supported by the subnet.

An important aspect of this process is its ability to adaptively assign road signs to different classes depending on the available annotations and level of support for each class label. For example, if a new road sign category is introduced but has not yet been fully trained or annotated, it can be temporarily assigned to the second class until sufficient training data is collected. Another aspect of various embodiments includes a disseminated training approach for signs that are known but not supported. Since the detector model 206A of FIG. 2 is trained to perform localization based on appearance-based categories rather than the class labels described with reference to FIG. 6B-6C, the detector model can even localize a sign that belongs to a known appearance-based category but does not belong to any of the class labels. It may be noted that every class label is assigned an appearance-based category and not vice versa.

Thus, even if the system does not have any data for a set of specific road signs but those signs fall in specific appearance-based categories, the detector model can localize those signs as well. This reduces the data hungriness of the system as compared to conventional systems because the volume of training data required for training the system to support unknown signs is lowered due to the fact that only the road sign label classifier model is required to be trained instead of the entire multi-stage neural network. Thus, the first two stages (the detector model 206A and the multi task classification model 206B) are frozen once their desired performance indices are met, and for any new sign class support, only the third stage (i.e., the road sign label classifier model 206C) is required to be updated. This results in faster iteration and reduced requirements for training resources.

To decrease reliance on data across all stages, various embodiments employ self-supervised learning techniques. Specifically, at the first stage (detector model 206A) a domain-specific pretext task for road sign detection is created that enables the model to better comprehend road sign representations. This learned representation for the downstream task is utilized by employing only a few road sign annotations to train the detector model in the first stage. The multi task classification model 206B is integrated as a multitask learning network that classifies road signs into three distinct branches: color code, shape, and digit code. This additional information on road sign features is invaluable for the map data consumption and validation of road sign types. At the third stage, each classifier model of the road sign label classifier model 206C is trained with its respective appearance-based category using the SSL approach, and synthetic data is used to handle the data scarcity issue, which allows the model to accommodate a greater number of class labels, ultimately enhancing the global footprint.

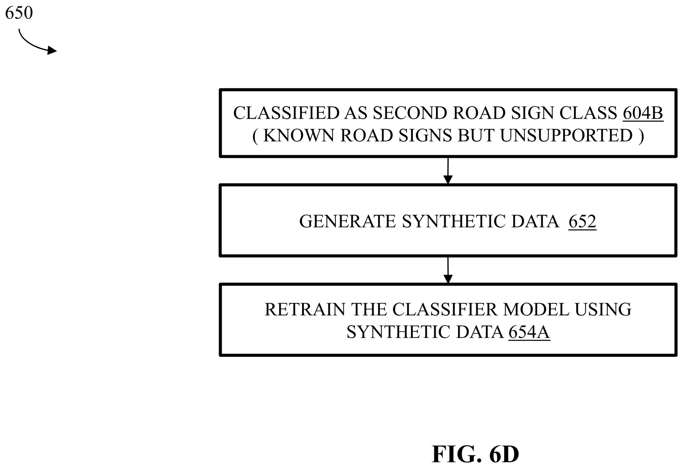

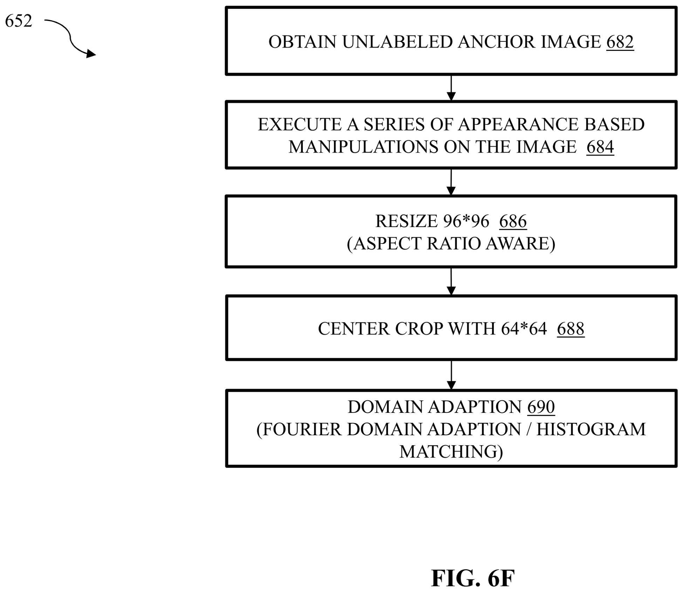

It may be noted that at the third stage, if for a class label, the system does not have a real example, it may not be able to classify the corresponding sign into that class even though the first stage may be able to localize the sign. To address this data scarcity issue various example embodiments dynamically generate synthetic data for retraining the model to classify such signs. FIG. 6D illustrates a flowchart 650 of retraining the neural network using synthetic data, in accordance with one or more example embodiments. When the system classifies a road sign under the second road sign class 604B as shown in flowchart 630, it indicates that the sign is recognized but not sufficiently supported by the classifier models. These could be with uncommon or newly added road signs that are identified (localized by the detector model and hence are known) but lack adequate training data in the model (i.e., unsupported). To address the data insufficiency or scarcity, the system generates synthetic data 652 corresponding to the identified road sign from the Second Road Sign Class. This synthetic data creation process involves leveraging the cropped image of the road sign to simulate new, artificial training examples. The synthetic data can replicate variations in lighting, angles, environmental conditions, and other factors, enhancing the diversity of the dataset for that particular sign category. To generate the synthetic data the system utilizes an anchor image. The anchor image may be a template image that is used as a starting point for the synthetic data generation process. In this regard, the anchor image may comprise road sign anchors which can then be subjected to variations and modifications to generate the desired volume of a dataset for retraining of the model at stage three. Details pertaining to the synthetic data generation are discussed later with reference to FIG. 6F.

Once the synthetic data has been generated, the system retrains 654A the neural network using the synthetic data. In this regard, as discussed previously, only the classifier model is retrained to learn a new class label for the unsupported sign. This step aims to fill in the gaps where the original training data was insufficient, enhancing the model's ability to recognize and accurately classify new or unsupported road signs in future detections. This process allows the model to continually improve by retraining itself with synthetic data, reducing the reliance on human labeling efforts. This retraining ensures that unsupported road signs in the second road sign class 604B gradually become better supported and accurately classified.

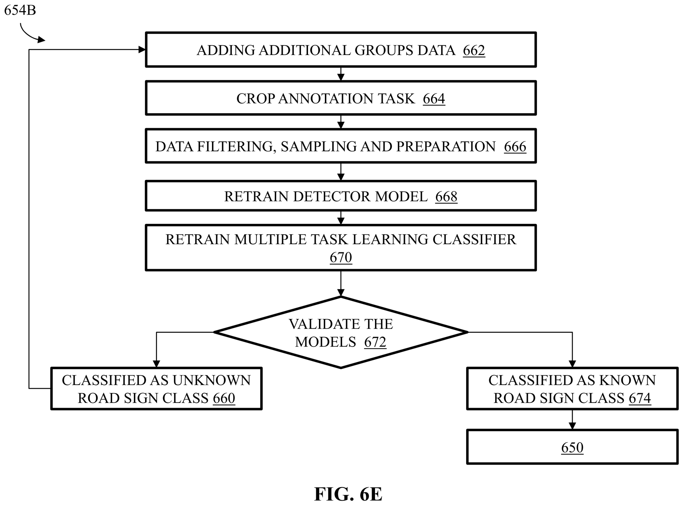

FIG. 6E illustrates a flowchart 654B of steps depicting an operation of retraining the neural network when a sign is unknown, in accordance with one or more example embodiments. This flowchart 614 outlines the process for retraining both the detector model 206A and the multi-task learning classifier 206B when new road signs are introduced, specifically when these road signs cannot be localized by the detector model Such a sign is classified as unknown road sign class 660. To address this issue, the process involves retraining of the detector and multi task learning model. The process involves adding additional group data at step 662 which, requires the collection and preparation of more data that includes the newly detected road signs. The additional data should be organized and categorized within their respective appearance-based groups to enhance the model's training dataset.

Following data collection, the crop annotation task 664 is performed in which the newly added road signs are cropped from the images, either manually or automatically. Cropping helps isolate the signs, creating precise training data necessary for the next stages of the process. Subsequently, at step 666 data filtering, sampling, and preparation are conducted. This involves filtering out irrelevant or noisy data, sampling representative images, and preparing the data to ensure consistency and quality. This step ensures that only high-quality, relevant samples are used for model retraining. With the prepared data, the detector model is retrained at step 668 which involves incorporating the new road sign into the model's learning process. The goal is to improve the detector's ability to recognize and localize the previously unsupported sign, allowing for better generalization across various conditions. Finally, the multi-task learning classifier is retrained at step 670 which involves retraining focusing on refining the classification of the road sign to generate appearance-based attributes. The classifier is updated to accurately categorize the signs based on attributes such as color, shape, and digit codes, ensuring that new road signs are correctly identified across all relevant branches.

After retraining both models, the updated system is tested again with new road signs to validate 672 the improvements. If the validation at step 672 yields an unknown road sign class 660, the steps 662-672 are repeated. However, if the validation yields a known road sign 674, the process at 650 in FIG. 6D is executed.

FIG. 6F illustrates a flowchart 652 of steps depicting the synthetic data generation used for retraining the classifier model, in accordance with one or more example embodiments. The synthetic data generation process involves obtaining 682 an unlabeled anchor image 682, applying 684 appearance-based manipulations, resizing 686, cropping images 688, and employing domain adaptation techniques 690. The first step 682 for obtaining an unlabeled anchor image involves collecting an anchor template from a plurality of anchor templates. These images provide the raw material for synthetic data generation and should encompass a wide range of road scenarios. Following data acquisition, the next step is to execute 684 a series of appearance-based manipulations on the anchor image. This involves applying various transformations such as hue transformation, saturation transformation, rotation perspective transformation, perlin noise, resizing 32*32 up to 96*96, motion blur, translation, brightness transformations, and adding of background. These manipulations are crucial for enhancing the dataset by introducing variations that simulate real-world conditions. The purpose of this step is to ensure that the model can handle diverse environmental factors, such as varying lighting conditions, camera angles, and motion effects, and can generalize well across different scenarios. By introducing noise and background complexity, the model is better equipped to detect and classify road signs accurately in both controlled and unpredictable environments. The process then involves resizing 686 the images to 96x96 pixels, while maintaining the aspect ratio. This resizing step ensures that images are uniformly scaled to a size that balances detail with computational efficiency. The preservation of the aspect ratio is important for retaining the integrity of road sign features during the resizing process. Additionally, resizing the images allows for consistent input dimensions across various stages of data processing, which is essential for optimizing the performance of the detection and classification models.

Followed by resizing, the center cropping 688 is applied to produce images of 64x64 pixels. This step focuses on the central region of the resized images, ensuring that key features such as road signs are captured. Center cropping helps in standardizing the input size for the model, which is critical for maintaining uniformity when training machine learning algorithms. It also removes irrelevant background information that may otherwise interfere with the model's ability to correctly identify and classify road signs. Finally, domain adaptation techniques including Fourier Domain Adaptation and Histogram Matching, are employed 690 to align the synthetic data with the characteristics of real-world images. These techniques help to minimize the domain gap, making the synthetic data more representative of actual conditions. These manipulations include domain adaptation which includes the Fourier domain adaption technique to adjust the image for different environmental conditions and sensor characteristics, histogram matching to adjust the pixel values of an image, and the manipulations are designed to create a diverse set of synthetic images and to train the detector model.

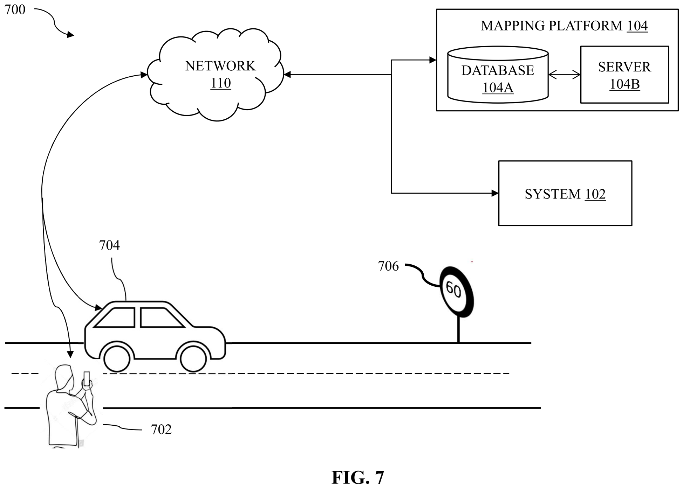

FIG. 7 illustrates a terrestrial data capture system 700 for performing road sign detection and classification using a multi-stage neural network, in accordance with one or more example embodiments. The process involves various components working together to identify and transmit road sign information to a centralized mapping system for real-time updates. The system 700 includes a mobile device operable automatically or by a user 702, who captures images of road signs such as speed limit sign 706 (which is limited to '60' mph) via a mobile device. Alternatively, the image may be captured through a dashcam of a vehicle 704. These images are uploaded to the mapping platform 104 via the network 110, which acts as the communication bridge between the user, the vehicle, and the mapping platform 104. The mapping platform 104 is a centralized system consisting of a database 104A and a server 104B. The database 104A stores road sign information, including categorized data on known road signs. The server 104B processes new road sign data, such as those transmitted from the vehicle or the user's mobile device, and communicates with the system 102 for real-time analysis and updates.

The system 102 analyzes the uploaded road sign data. It employs various image recognition and machine learning techniques to classify the signs and determine their characteristics. In this example, the system analyzes the road sign 706, captured by the user or vehicle, and identifies key attributes like color, shape, and any numeric values. The analyzed data is sent back to the Mapping Platform 104 for further processing or storage.

One key aspect of the system is its flexibility to handle data from both mobile users and vehicles. The mobile user 702 could be a pedestrian using a mobile phone, while 704 represents a vehicle capturing road signs while driving. This dual-source input ensures that the system can gather a wide range of data in different environments. A practical application of the system could involve detecting changes to road signs that are not yet updated on the mapping platform. For example, if a speed limit sign 706 has been updated from 60 km/h to 50 km/h, a vehicle or user would capture the new sign, and the system may process this information to reflect the updated road conditions in the map database.

According to some embodiments, additional sensors or cameras could be used to capture not only visual data but also environmental conditions (e.g., rain, fog) that might affect road sign visibility. Similarly, integration with vehicle-to-everything (V2X) communication systems could enhance the data-sharing capabilities between different vehicles and infrastructure.

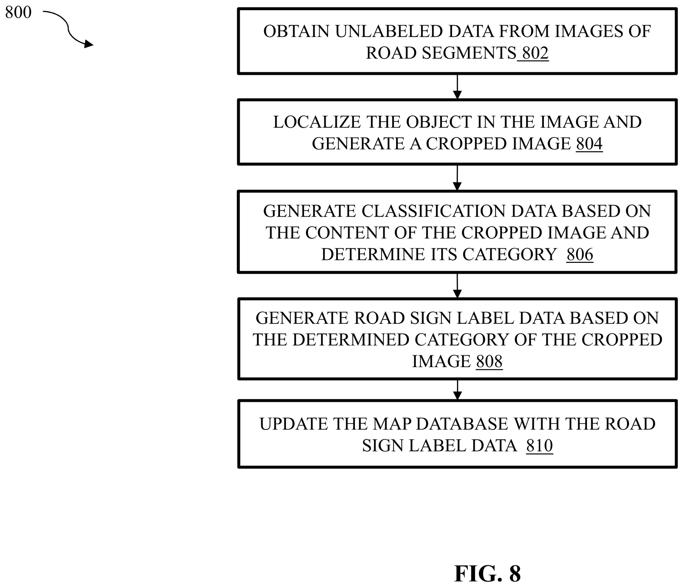

FIG. 8 illustrates a flowchart 800 of steps depicting an operation for road sign detection using a multi stage neural network, in accordance with one or more example embodiments. This flowchart outlines a comprehensive process for road sign detection and classification from street-level imagery using a multi-stage neural network. The process initiates with the step 802 of obtaining unlabeled data from images of road segments. This involves collecting various images of road segments to serve as the input for subsequent analysis. The next step 804 is to localize the objects within these images and generate cropped images of the detected road signs. This step isolates the road signs from their backgrounds, preparing them for detailed examination and classification. Once the road signs are cropped, at step 806 the system generates classification data based on the content of these cropped images and determines their category. This classification process involves analyzing the visual attributes of the road signs, such as color, shape, and text, to categorize each sign into predefined classes.

Following the classification, in the next step 808 the road sign label data is generated based on the determined category of the cropped image. For this, the third model 206C comprises a subnet for each category of the plurality of appearance-based categories which is responsible for mapping the appearance-based categories to specific class labels accordingly, which are classified as first road sign class which are known and supported, a second road sign class which are known but unsupported and unknown road signs. The system may output the road sign label data, which provides detailed class labels for each detected road sign which is then updated in the map database.

Finally, the system updates 810 the map database with the generated road sign label data. This integration ensures that the latest road sign information is incorporated into the map database, enhancing its accuracy and reliability for navigation and mapping.

It will be understood that each block of the flow diagram of the method 800 may be implemented by various means, such as hardware, firmware, processor, circuitry, and/or other communication devices associated with the execution of software including one or more computer program instructions. For example, one or more of the procedures described above may be embodied by computer program instructions. In this regard, the computer program instructions that embody the procedures described above may be stored by the memory 204 of the system 102, employing an embodiment of the present invention and executed by the processor 202. As will be appreciated, any such computer program instructions may be loaded onto a computer or other programmable apparatus (for example, hardware) to produce a machine, such that the resulting computer or other programmable apparatus implements the functions specified in the flow diagram blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions that execute on the computer or other programmable apparatus provide operations for implementing the functions specified in the flow diagram blocks.

Accordingly, blocks of the flow diagram 800 may support combinations of means for performing the specified functions and combinations of operations for performing the specified functions for performing the specified functions. It will also be understood that one or more blocks of the flow diagram, and combinations of blocks in the flow diagram, may be implemented by special-purpose hardware-based computer systems that perform the specified functions, or combinations of special-purpose hardware and computer instructions.

It may be contemplated that in various example embodiments, there may be different configurations for the system 102 as well as various components utilized or in communication with the system 102. As such, each such component may serve a unique purpose and provide an advantage in terms of operational capabilities. For example, referring back to FIG. 1, the network environment 100 may be designed to facilitate efficient processing and management of road sign detection data across data sources and configurations. In an exemplary embodiment, the system 102 is versatile and may be implemented in multiple configurations based on application needs. For instance, the system 102 may be realized as a cloud-based service, a cloud-based application, a cloud-based platform, a remote server-based service, a remote server-based application, a remote server-based platform, or a virtual computing system. As such, the system 102 can function within the mapping platform 104 or within user equipment 106A and 106B. In each configuration, the system 102 is connected to the components depicted in FIG. 1 to execute the necessary operations, with the flexibility to adapt and modify as required by the scope of the present disclosure.

For instance, the system 102 may be implemented as a cloud-based service or application, utilizing cloud computing resources to manage and process road sign detection data. This cloud-based setup allows the system 102 to scale efficiently, handle extensive data volumes, and support a user base across various geographical regions. Alternatively, the system 102 may be embodied as a remote server-based service, where it operates from a dedicated server to provide specialized processing capabilities for the road sign detection system and associated user equipment 106A and 106B. This configuration is particularly advantageous when high-performance computing is needed or when the system 102 must function independently from local hardware resources. In this case, the system 102 can dynamically allocate computing resources based on real-time demands, ensuring optimal performance and resource utilization. Such a virtual computing system may operate, for example, within the mapping platform 104 inside the server 104B or within the database 104A, integrating seamlessly with the platform's existing infrastructure.

For manually driven vehicles, the system 102 may provide real-time alerts and updates about road signs, contributing to improved road safety and navigation quality. The system 102 may also lead to the development and/or update of a map database such as the map database 104A based on the road sign detection and classification performed by the system 102.

In an embodiment, the system 102 may be deployed within a network of vehicles or roadside units to collect imagery and sensor data specifically for detecting and classifying road signs according to road sign label naming convention. Such systems may be equipped with advanced cameras and data collection technologies that capture detailed information about road signs and related road features. The data collected by these systems may be processed using self-supervised learning techniques to create accurate observations and classifications of road signs, which are then used to update and refine the road sign database.

In certain embodiments, the system 102 leverages cloud-based infrastructure to handle the processing, storage, and management of large volumes of road sign detection data. By utilizing cloud computing resources, the system can efficiently process real-time imagery captured by vehicle sensors, including cameras and LiDAR. This approach allows for scalable data processing across multiple geographic regions, enabling the system to adapt to regional variations in road sign appearances. Additionally, the cloud-based system 102 supports continuous updates to the road sign detection models, ensuring vehicles receive the latest improvements without the need for local processing or manual intervention. The cloud infrastructure also facilitates data aggregation from multiple vehicles, which can be used to enhance the accuracy of the road sign detection models by incorporating diverse data inputs from various environments.

In various embodiments, the system 102 may invoke the mapping platform 104 for performing one or more actions such as navigation, map making, and/or map updating. Alternately, in some embodiments, the mapping platform 104 may invoke the system 102 for generating road sign label data corresponding to one or more detected road signs and thereby updating the map database 104A. The mapping platform 104 includes the map database 104A and the mapping server 104B. The map database 104A stores all the map-related data, including node data, road segment data, points of interest (POI) data, and road sign detection data. The server 104B is responsible for managing data requests, processing information, and facilitating communication between the map database 104A, the system 102, and the user equipment 106A/106B.

In some other embodiments, the system 102 may be embodied as or within the server 104B of the mapping platform 104 and therefore may be co-located with or within the mapping platform 104. The mapping platform 104 may comprise the map database 104A (also referred to as geographic database 104A) for storing map data and a processing server 104B for carrying out the processing functions associated with the mapping platform 104. The map database 104A may store, as the map data, node data, road segment data or link data, point of interest (POI) data, and/or road sign data. The map database 104A may also store, as the map data, cartographic data and/or routing data.

Additionally, the map database 104A may store path segment and node data records, or other data that may represent pedestrian paths or areas in addition to or instead of the vehicle road record data, for example. The links/road segments and nodes may be associated with attributes, such as geographic coordinates and other navigation-related attributes, as well as POIs, such as fueling stations, hotels, restaurants, museums, stadiums, offices, auto repair shops, buildings, stores, parks, etc. The navigation-related attributes may include travel speed data (e.g. data indicative of a permitted speed of travel) on the road represented by the link data record, travel direction data (e.g. data indicative of a permitted direction of travel) on the road represented by the link data record, the linear feature data on the road represented by the link data record, the road lane detection data on the road represented by the link data record, street address ranges of the road represented by the link data record, the name of the road represented by the link data record, and the like.

Additionally, the map database 104A may also include data about the POIs and their respective locations in the POI records. The map database 104A may further include data about places, such as cities, towns, or other communities, and other geographic features such as bodies of water, mountain ranges, etc. Such place or feature data may be part of the POI data or may be associated with POIs or POI data records (such as a data point used for displaying a city). In addition, the map database 104A may include event data (e.g., traffic incidents, construction activities, scheduled events, unscheduled events, etc.) associated with the POI data records or other records of the map database 104A.

The map database 104A may be maintained by a content provider, e.g., a map developer. By way of example, the map developer may collect the map data to generate and enhance the map database 104A. There may be different ways used by the map developer to collect data, such ways including obtaining data from other sources, such as municipalities or respective geographic authorities. In addition, the map developer may employ data from user equipment 106A and/or 106B which may travel along roads throughout a geographic region to observe features and/or record information about them. Also, remote sensing, such as aerial or satellite photography, may be used to collect the map data. In some example embodiments, the map data in the map database 104A may be stored as a digital map.

According to some embodiments, the map database 104A may be a master map database stored in a format that facilitates updating, maintenance, and development. The data in the production and/or delivery formats may be compiled or further compiled to form geographic database products or databases, which may be used in end-user navigation devices or systems.

For example, the map data may be compiled (such as into a platform specification format (PSF format)) to organize and/or configure the data for performing navigation-related functions and/or services, such as route calculation, route guidance, map display, speed calculation, distance and travel time functions, navigation instruction generation, road sign guidance, and other functions, by a navigation device, such as by the user equipment 106A and/or 106B. The navigation-related functions may correspond to vehicle navigation, pedestrian navigation, navigation instruction suppression, navigation instruction generation based on user preference data, or other types of navigation.

As mentioned above, the map database 104A may be a master geographic database, but in alternate embodiments, the map database 104A may be embodied as a client-side map database and may represent a compiled navigation database that may be used in or with end-user equipment such as the user equipment 106A and/or the user equipment 106B to provide navigation and/or map-related functions. For example, the map database 104A may be used with the user equipment 106A and/or the user equipment 106B to provide an end user with navigation features. In such a case, the map database 104A may be downloaded or stored locally (cached) on the user equipment 106A and/or the user equipment 106B.

The processing server 104B may comprise processing means, and communication means. For example, the processing means may comprise one or more processors configured to process requests received from the user equipment 106A and/or the user equipment 106B. The processing means may fetch map data from the map database 104A and transmit the same to the user equipment 106B via the OEM cloud 108 in a format suitable for use by the one or both of the user equipment 106A and/or the user equipment 106B. In one or more example embodiments, the mapping platform 104 may periodically communicate with the user equipment 106A and/or the user equipment 106B via the processing server 104B to update a local cache of the map data stored on the user equipment 106A and/or the user equipment 106B. Accordingly, in some example embodiments, the map data may also be stored on the user equipment 106A and/or the user equipment 106B and may be updated based on periodic communication with the mapping platform 104 via the network 110.

The network 110 may be wired, wireless, or any combination of wired and wireless communication networks, such as cellular, Wi-Fi, internet, local area networks, or the like. In one embodiment, the network 110 may include one or more networks such as a data network, a wireless network, a telephony network, or any combination thereof. It is contemplated that the data network may be any local area network (LAN), metropolitan area network (MAN), wide area network (WAN), a public data network (e.g., the Internet), short-range wireless network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks (for e.g. LTE-Advanced Pro), 5G New Radio networks, ITU-IMT 2020 networks, code division multiple access (CDMA), wideband code division multiple access (WCDMA), wireless fidelity (Wi-Fi), wireless LAN (WLAN), Bluetooth, Internet Protocol (IP) data casting, satellite, mobile ad-hoc network (MANET), and the like, or any combination thereof.

In some example embodiments, the user equipment 106A and the user equipment 106B may be any user-accessible device such as a mobile phone, a smartphone, a portable computer, and the like that are portable in themselves or as a part of another portable/mobile object such as a vehicle. The user equipment 106A and 106B may comprise a processor, a memory, and a communication interface. The processor, the memory, and the communication interface may be communicatively coupled to each other. In some example embodiments, the user equipment 106A, and 106B may be associated, coupled, or otherwise integrated with a vehicle, such as an advanced driver assistance system (ADAS), a personal navigation device (PND), a portable navigation device, an infotainment system and/or other device that may be configured to provide route guidance and navigation-related functions to the user. In such example embodiments, the user equipment 106A and 106B may comprise processing means such as a central processing unit (CPU), storage means such as on-board read-only memory (ROM) and random access memory (RAM), acoustic sensors such as a microphone array, position sensors such as a GPS sensor, gyroscope, a LIDAR sensor, a proximity sensor, motion sensors such as accelerometer, a display enabled user interface such as a touch screen display, and other components as may be required for specific functionalities of the user equipment 106A and 106B. For example, the user equipment 106A and 106B may be configured to execute and run mobile applications such as a messaging application, a browser application, a navigation application, and the like.

In some embodiments, user equipment, such as user equipment 106A, may be integrated directly with the system 102 to gather data specifically for the development and refinement of road sign detection systems. For example, user equipment 106A may be a specialized vehicle equipped with sensors that capture detailed images of road signs and other road objects while traversing various road segments. This sensor data is crucial for training and updating the road sign detection models within the system 102. In another embodiment, user equipment 106B, which may be a consumer vehicle, can be connected to the system 102 via the OEM cloud 108 and network 110 to benefit from the updated map data. User equipment 106B may serve a dual role, both collecting data on road signs and other objects and using the updated data for enhanced navigation. The system 102 processes this data to update the map database 104A, ensuring that the road sign detection models are accurate and reflective of current road conditions. Additionally, user equipment 106A or 106B can include various types of sensors, such as cameras or LiDAR, to collect comprehensive data from their environment, which is essential for maintaining an accurate and up-to-date map database.

In this way, various embodiments provide a framework that is particularly applicable to road sign detection systems in mapping technologies, where real-time data collection, classification, and processing are critical for ensuring accuracy and operational efficiency. The system involves a multi-step process of detecting and classifying road signs using a multi-task learning model that is capable of processing appearance-based categories, geometric shapes, and numeric codes on road signs. This process is further enhanced by the flexibility of the model, which can process these tasks in various sequences, based on the specific design requirements. Additionally, the system integrates synthetic data generation to handle signs that are known but unsupported within the current dataset, allowing for continuous model retraining. This retraining is aimed at refining both the detection and classification processes to support a broader range of road signs and improve overall model accuracy. This synthetic data is incorporated into the retraining process, allowing the model to expand its detection capabilities for new or rare road signs.

The system also involves a classification phase, where data is assigned to one of several categories a first road sign class for fully supported signs, a second road sign class for known but unsupported signs, and a negative class for unknown or out-of-scope signs. This classification plays a critical role in the broader map updating processes. For instance, data collected from unsupported signs can later be used to enhance the model's training set, thereby improving its ability to classify similar signs in the future. Additionally, by integrating manually annotated data with synthetic data, the system ensures that the map database remains accurate and reflective of real-world road sign conditions.

Therefore, in accordance with various embodiments of the present disclosure, the map data in a map database may be updated in an efficient manner such that the updated map data corresponds to a 'true' or 'near true' reflection of a dynamically changing real-world environment. Enabled with such an improved and updated map database, end use devices and systems such as navigation systems that utilize the map database for generating routing instructions benefit from the improved accuracy and are thus capable of generating accurate navigation control instructions. In this way, embodiments of the present disclosure provide measures and techniques to mitigate inaccuracies of navigation systems, thereby reducing potentially dangerous maneuvers that could otherwise have led to accidents or collisions of the vehicles utilizing the map data of the map database. Thus, several embodiments of the disclosure find applications in the real world while providing technical improvements in the field of mapping and navigation technology as well as vehicle safety.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A system, comprising:
a memory configured to store computer-executable instructions and a neural network trained for road sign detection; and
a processor configured to execute the instructions to:
obtain an unlabeled image of a road segment;
execute the neural network to identify a road sign in the unlabeled image, wherein the neural network comprises:
a first model configured to localize an object in the unlabeled image to generate a cropped image;
a second model configured to:
generate classification data associated with the cropped image, based on content of the cropped image, wherein the classification data corresponds to one or more appearance attributes of the cropped image; and
determine a category of the cropped image, based on the classification data of the cropped image; and
a third model configured to generate road sign label data for the unlabeled image, based on the determined category of the cropped image, wherein the road sign label data represents the identified road sign; and output the road sign label data.

2. The system of claim 1, wherein the road sign label data comprises a class label defining one of: a first road sign class corresponding to known road signs supported by the third model, a second road sign class corresponding to known road signs that are unsupported by the third model, or a negative class corresponding to unknown road signs.

3. The system of claim 1, wherein the processor is further configured to update a map database, based on the road sign label data.

4. The system of claim 1, wherein the unlabeled image is captured by one of: a dashcam of a vehicle, or a mobile device.

5. The system of claim 1, wherein the one or more appearance attributes of the cropped image comprise:
a color code indicating one or more colors in the content of the cropped image;
one or more geometric shapes defined by pixels of the cropped image; or
a digit code indicating a presence of a number within the cropped image.

6. The system of claim 1, wherein the generated road sign label data for the unlabeled image includes the second road sign class and wherein the third model is retrained to provide support for the unlabeled image of the second road sign class wherein the retraining comprises:
obtaining a set of heterogenous training images and a set of labeled images, wherein each image of the set of labeled images comprises at least one target road sign corresponding to an appearance-based category of a plurality of appearance-based categories;
generating a set of synthetic images by performing a plurality of manipulations on the set of heterogenous training images;
defining a pretext task for self-supervised training of the first model, wherein the pretext task corresponds to detection and localization of road sign anchors within the set of synthetic images;
training the third model in a self-supervised manner based on the pretext task and the set of synthetic images to obtain a pretext model;
training the pretext model to detect and localize the at least one target road sign in each image of the set of labeled images.

7. The system of claim 1, wherein the second model comprises:
a first subnet trained to:
detect one or more colors in the content of the cropped image; and
determine one or more color codes corresponding to the detected one or more colors;
a second subnet trained to:
identify one or more geometric shapes in the content of the cropped image; and
generate one or more shape codes corresponding to the identified one or more geometric shapes; and
a third subnet trained to:
determine one of a presence or an absence of a number within the cropped image;
generate a presence code indicating one of: the presence of the number in the cropped image or the absence of the number in the cropped image; and
generate a numeral code corresponding to the detected number in the cropped image, based on the determined presence or absence of the number within the cropped image.

8. The system of claim 1, wherein the determined category is selected from a plurality of appearance-based categories, wherein the neural network comprises a plurality of classifier models, wherein the third model is a classifier model of the plurality of classifier models, and wherein each classifier model of the plurality of classifier models corresponds to a respective category of the plurality of appearance-based categories,
wherein each classifier model of the plurality of classifier models is trained to map a corresponding category of the plurality of appearance-based categories with a corresponding class label of the set of class labels, and
wherein each class label of the set of class labels defines one of:
a first road sign class corresponding to known road signs supported by the corresponding classifier model;
a second road sign class corresponding to known road signs that are unsupported by the corresponding classifier model; or
a negative class corresponding to unknown road signs.

9. The system of claim 2, wherein the generated road sign label data for the unlabeled image includes the second road sign class, and wherein the processor is further configured to retrain the third model using synthetic data corresponding to the generated road sign label data.

10. The system of claim 9, wherein the processor is further configured to generate the synthetic data corresponding to the generated road sign label data, based on an anchor image.

11. A computer-implemented method, comprising:
obtaining an unlabeled image of a road segment;
executing a neural network that is trained to identify a road sign in the unlabeled image, wherein the neural network comprises:
a first model for localizing an object in the unlabeled image to generate a cropped image;
a second model for:
generating classification data associated with the cropped image, based on content of the cropped image, wherein the first classification data corresponds to one or more appearance attributes of the cropped image; and
determining a category of the cropped image, based on the classification data of the cropped image; and
a third model for generating the road sign label data for the unlabeled image, based on the determined category of the cropped image, wherein the road sign label data represents the identified road sign; and
outputting the road sign label data.

12. The computer-implemented method of claim 11, wherein the road sign label data comprises a class label defining one of: a first road sign class corresponding to known road signs supported by the third model, a second road sign class corresponding to known road signs that are unsupported by the third model, or a negative class corresponding to unknown road signs.

13. The computer-implemented method of claim 11, further comprising updating a map database, based on the road sign label data.

14. The computer-implemented method of claim 11, wherein the generated road sign label data for the unlabeled image includes the second road sign class and wherein the third model is retrained to provide support for the unlabeled image of the second road sign class, wherein the retraining comprises:
obtaining a set of heterogenous training images and a set of labeled images, wherein each image of the set of labeled images comprises at least one target road sign corresponding to an appearance-based category of a plurality of appearance-based categories;
generating a set of synthetic images by performing a plurality of manipulations on the set of heterogenous training images;
defining a pretext task for self-supervised training of the first model, wherein the pretext task corresponds to detection and localization of road sign anchors within the set of synthetic images;
training the third model in a self-supervised manner based on the pretext task and the set of synthetic images to obtain a pretext model;
training the pretext model to detect and localize the at least one target road sign in each image of the set of labeled images.

15. A non-transitory computer-readable storage medium including one or more sequences of one or more instructions which, when executed by one or more processors, cause the one or more processors to at least perform:
obtaining an unlabeled image of a road segment;
executing a neural network that is trained to identify a road sign in the unlabeled image, wherein the neural network comprises:
a first model for localizing an object in the unlabeled image to generate a cropped image;
a second model for:
generating classification data associated with the cropped image, based on content of the cropped image, wherein the first classification data corresponds to one or more appearance attributes of the cropped image; and
determining a category of the cropped image, based on the classification data of the cropped image; and
a third model for generating road sign label data for the unlabeled image, based on the determined category of the cropped image, wherein the road sign label data represents the identified road sign; and
outputting the road sign label data.
